# EUROPEAN PATENT APPLICATION

(11) **EP 4 694 271 A1**
(43) Date of publication of application: **11.02.2026**
(21) Application number: 24803502.4
(22) Date of filing: 08.05.2024
(51) Int. Cl.: H04W 16/26, H04W 36/08

(54) **COMMUNICATION METHOD AND RELAY DEVICE**

(30) Priority: 11.05.2023 US 202363501479 P
(71) Applicant: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2024/017139
(87) International publication number: WO 2024/232393

(57) **Abstract**

A communication method performed by a relay apparatus including a relay device configured to perform a relay operation of relaying a radio signal transmitted between a base station and a user equipment, and a control terminal configured to receive a control signal used for control of the relay device from the base station, includes a step of receiving configuration information regarding the relay operation from a first cell, a step of performing the relay operation by use of the configuration information when the control terminal is in a radio resource control (RRC) inactive state in the first cell, a step of stopping the relay operation when performing a cell reselection from the first cell to a second cell, and a step of resuming the relay operation by use of the configuration information when performing a cell reselection to the first cell within a predetermined time period after performing the cell reselection to the second cell.

## Description

### TECHNICAL FIELD

The present disclosure relates to a communication method and a relay apparatus used in a mobile communication system.

### BACKGROUND OF INVENTION

In recent years, a mobile communication system of the fifth generation (5G) has been attracting attention. New Radio (NR), which is a radio access technology of the 5G system, is capable of wide-band transmission via a high frequency band as opposed to Long Term Evolution (LTE), which is a fourth-generation radio access technology.

Since radio signals (radio waves) in the high frequency band such as a millimeter wave band or a terahertz wave band have high rectilinearity, reduction of coverage of a base station is a problem. In order to solve such a problem, a repeater apparatus that is a type of relay apparatus relaying radio signals between the network and a user equipment and can be controlled from a network is attracting attention (see, for example, Non-Patent Document 1).

Such a repeater apparatus can extend the coverage of the base station while suppressing occurrence of interference by, for example, amplifying a radio signal received from the base station and transmitting the radio signal through directional transmission. Such a repeater apparatus is referred to as a network-controlled repeater (NCR).

### CITATION LIST

### NON-PATENT LITERATURE

Non-Patent Document 1: 3GPP Contribution: RP-213700, "New SI: Study on NR Network-controlled Repeaters"

### SUMMARY

A communication method according to a first aspect is a communication method performed by a relay apparatus including a relay device configured to perform a relay operation of relaying a radio signal transmitted between a base station and a user equipment, and a control terminal configured to receive a control signal used for control of the relay device from the base station, and the communication method includes a step of receiving configuration information regarding the relay operation from a first cell, a step of performing the relay operation by use of the configuration information when the control terminal is in a radio resource control (RRC) inactive state in the first cell, a step of stopping the relay operation when performing a cell reselection from the first cell to a second cell, and a step of resuming the relay operation by use of the configuration information when performing a cell reselection to the first cell within a predetermined time period after performing the cell reselection to the second cell.

A relay apparatus according to a second aspect includes a relay device configured to perform a relay operation of relaying a radio signal transmitted between a base station and a user equipment, and a control terminal configured to receive a control signal used for control of the relay device from the base station, wherein the control terminal includes a receiver configured to receive configuration information regarding the relay operation from a first cell, and a controller configured to control the relay device to perform the relay operation by use of the configuration information when the control terminal is in a radio resource control (RRC) inactive state in the first cell, and the controller is configured to stop the relay operation when performing cell reselection from the first cell to a second cell, and resume the relay operation by use of the configuration information when performing a cell reselection to the first cell within a predetermined time period after performing the cell reselection to the second cell.

A communication method according to a third aspect is a communication method performed by a relay apparatus, the relay apparatus including a relay device configured to perform a relay operation of relaying a radio signal transmitted between a base station and a user equipment, and a control terminal configured to receive a control signal used for control of the relay device from the base station, the communication method including a step of receiving first configuration information regarding the relay operation from the base station, a step of receiving, from the base station, second configuration information regarding whether the control terminal in a radio resource control (RRC) inactive state performs detection processing of a beam failure with respect to the base station, and a step of controlling the relay operation, based on the first configuration information and controlling the detection processing, based on the second configuration information, when the control terminal is in the RRC inactive state.

A relay apparatus according to a fourth aspect includes a relay device configured to perform a relay operation of relaying a radio signal transmitted between a base station and a user equipment, and a control terminal configured to receive a control signal used for control of the relay device from the base station, wherein the control terminal includes a receiver configured to receive first configuration information regarding the relay operation from the base station, and receive, from the base station, second configuration information regarding whether the control terminal in a radio resource control (RRC) inactive state performs detection processing of a beam failure with respect to the base station, and a controller configured to control the relay operation, based on the first configuration information and control the detection processing, based on the second configuration information, when the control terminal is in the RRC inactive state.

### BRIEF DESCRIPTION OF THE DRAWINGS

FIG. 1 is a diagram illustrating a configuration of a mobile communication system according to an embodiment.
FIG. 2 is a diagram illustrating a configuration of a protocol stack of a wireless interface of a user plane handling data.
FIG. 3 is a diagram illustrating a configuration of a protocol stack of a wireless interface of a control plane handling signaling (control signal).
FIG. 4 is a diagram illustrating an example of an application scenario of an NCR apparatus (relay apparatus) according to an embodiment.
FIG. 5 is a diagram illustrating an example of an application scenario of the NCR apparatus according to the embodiment.
FIG. 6 is a diagram illustrating an example of a control method for the NCR apparatus according to the embodiment.
FIG. 7 is a diagram illustrating an example of a configuration of a protocol stack in the NCR apparatus according to the embodiment.
FIG. 8 is a diagram illustrating an example of the configuration of the NCR apparatus according to the embodiment.
FIG. 9 is a diagram illustrating a configuration of a UE (user equipment) according to the embodiment.
FIG. 10 is a diagram illustrating an example of a configuration of a gNB (base station) according to the embodiment.
FIG. 11 is a diagram for explaining an operation of a mobile communication system according to a first embodiment.
FIG. 12 is a diagram for explaining the operation of the mobile communication system according to the first embodiment.
FIG. 13 is a flowchart illustrating an example of an operation of an NCR apparatus according to the first embodiment.
FIG. 14 is a diagram for explaining an operation of a mobile communication system according to a second embodiment.
FIG. 15 is a flowchart illustrating an example of an operation of an NCR apparatus according to the second embodiment.
FIG. 16 is a diagram for explaining an RIS apparatus (relay apparatus) according to a third embodiment.
FIG. 17 is a diagram for explaining the RIS apparatus (relay apparatus) according to the third embodiment.

### DESCRIPTION OF EMBODIMENTS

A mobile communication system according to an embodiment is described with reference to the drawings. In the description of the drawings, the same or similar parts are denoted by the same or similar reference signs.

### (1) First Embodiment

A first embodiment is described first. A relay apparatus according to an embodiment is a repeater apparatus (that is, an NCR apparatus) that can be controlled from a network.

### (1.1) Overview of Mobile Communication System

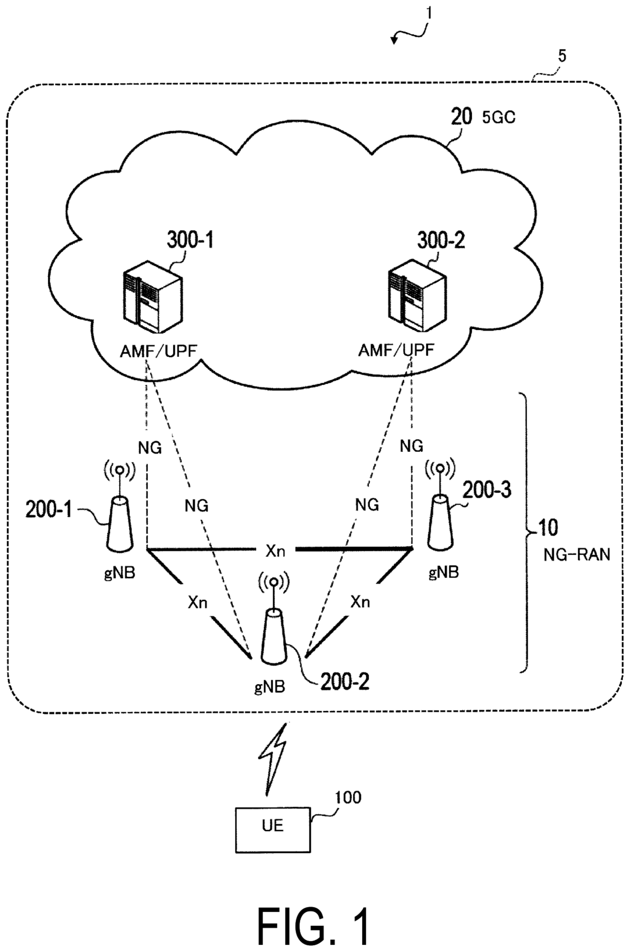

FIG. 1 is a diagram illustrating a configuration of a mobile communication system according to an embodiment.

A mobile communication system 1 complies with the 5th Generation System (5GS) of the 3rd Generation Partnership Project (3GPP; trade name, the same applies below) standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes User Equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 constitute a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

The gNB 200 may be functionally divided into a central unit (CU) and a distributed unit (DU). The CU controls the DU. The CU is a unit including upper layers included in a protocol stack described below, such as an RRC layer, an SDAP layer, and a PDCP layer, for example. The CU is connected to a core network via an NG interface which is a backhaul interface. The CU is connected to an adjacent base station via the Xn interface, which is an inter-base station interface. The DU forms a cell. The DU 202 is a unit including lower layers included in the protocol stack described below, such as an RLC layer, a MAC layer, and a PHY layer, for example. The DU is connected to the CU via an F1 interface which is a fronthaul interface.

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

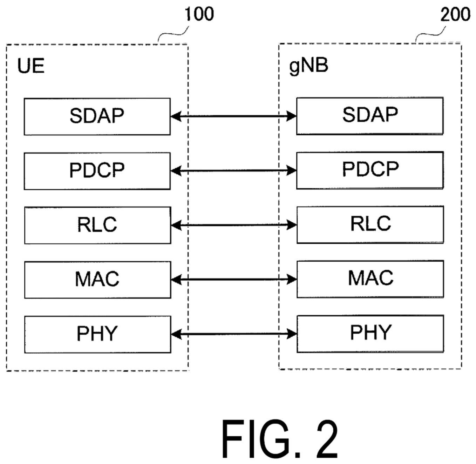

FIG. 2 is a diagram illustrating a configuration of a protocol stack of a wireless interface of a user plane handling data.

A wireless interface protocol of the user plane includes a PHYsical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of PDCCH using a radio network temporary identifier (RNTI) and acquires successfully decoded DCI as DCI addressed to the UE. The DCI transmitted from the gNB 200 is added with a cyclic redundancy code (CRC) bit scrambled by the RNTI.

The gNB 200 transmits a synchronization signal block (SSB: Synchronization Signal/PBCH block). For example, the SSB includes four consecutive Orthogonal Frequency Division Multiplex (OFDM) symbols, and a primary synchronization signal (PSS), a secondary synchronization signal (SSS), a physical broadcast channel (PBCH)/master information block (MIB), and a demodulation reference signal (DMRS) of the PBCH are disposed. A bandwidth of the SSB is, for example, a bandwidth of 240 consecutive subcarriers, that is, 20 RB.

The MAC layer performs priority control of data, retransmission processing through hybrid ARQ (Hybrid Automatic Repeat reQuest (HARQ)), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception end by using functions of the MAC layer and the PHY layer. Data and control information are transmitted between the RLC layer of the UE 100 and the RLC layer of the gNB 200 via a logical channel.

The PDCP layer performs header compression and decompression, encryption and decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

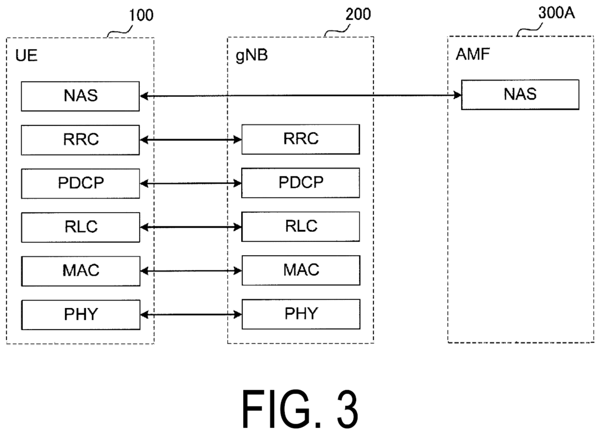

FIG. 3 is a diagram illustrating a configuration of a protocol stack of a wireless interface of a control plane handling signaling (a control signal).

The protocol stack of the wireless interface of the control plane includes a Radio Resource Control (RRC) layer and a Non-Access Stratum (NAS) layer instead of the SDAP layer illustrated in FIG. 2.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS layer, which is located above the RRC layer, performs session management, mobility management, and the like. NAS signaling is transmitted between the NAS layer of the UE 100 and the NAS layer of an AMF 300A. Note that the UE 100 includes an application layer other than the protocol of the wireless interface. A layer lower than the NAS layer is referred to as an Access Stratum (AS).

### (1.2) Example of Application Scenario of Relay Apparatus

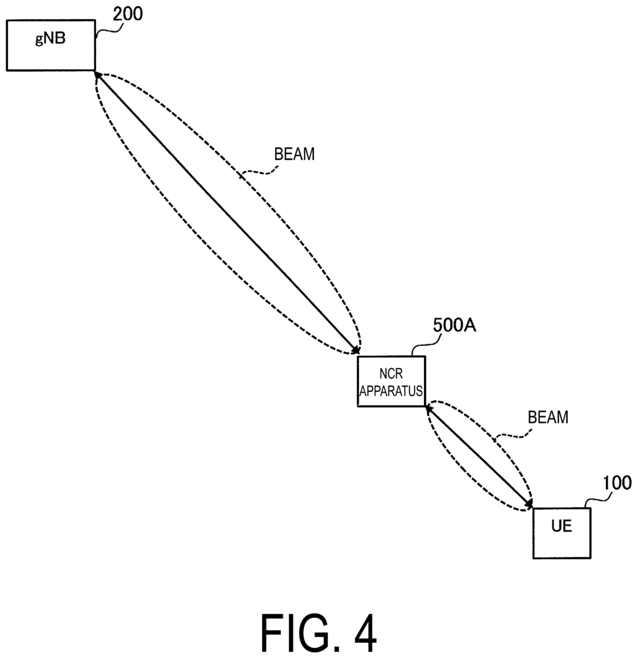

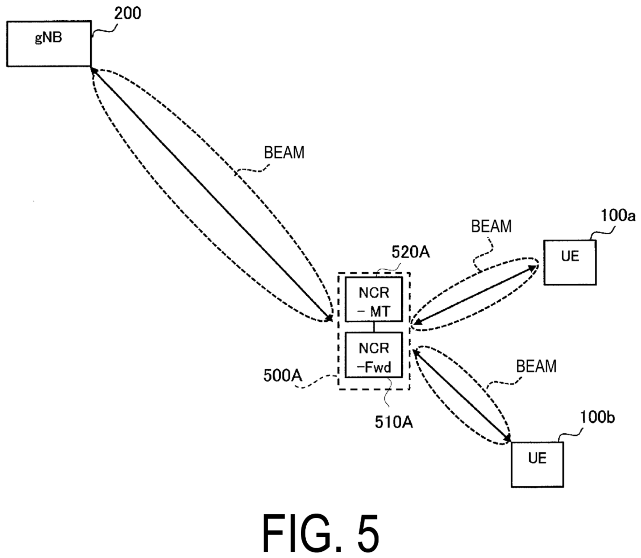

FIGs. 4 and 5 are diagrams showing an example of an application scenario of an NCR apparatus according to an embodiment.

The 5G/NR is capable of wide-band transmission via a high frequency band compared to the 4G/LTE. Since radio signals in the high frequency band such as a millimeter wave band or a terahertz wave band have high rectilinearity, a problem is reduction of coverage of the gNB 200. In FIG. 4, the UE 100 may be located outside a coverage area of the gNB 200, for example, outside an area where the UE 100 can receive radio signals directly from the gNB 200. The UE 100 may be in a state of not communicatable with the gNB 200 within a line of sight because of obstacles existing between the gNB 200 and the UE 100.

As illustrated in FIG. 4, an NCR apparatus 500A is introduced into the mobile communication system 1, wherein the NCR apparatus 500A is a repeater apparatus (500A) as a type of relay apparatus relaying radio signals between the gNB 200 and the UE 100, and can be controlled from the network 5. Such a repeater apparatus may be called a smart repeater apparatus.

For example, the NCR apparatus 500A amplifies a radio signal (radio wave) received from the gNB 200 and transmits the radio signal through directional transmission. To be specific, the NCR apparatus 500A receives a radio signal transmitted by the gNB 200 through beamforming. The NCR apparatus 500A amplifies the received radio signal without demodulation and modulation and transmits the amplified radio signal through the directional transmission. Here, the NCR apparatus 500A may transmit the radio signal with a fixed directivity (beam). The NCR apparatus 500A may transmit a radio signal with a variable (adaptive) directional beam. This can efficiently extend the coverage of the gNB 200.

As illustrated in FIG. 5, a new UE (hereinafter referred to as "NCR-MT (Mobile termination)") 100B, which is a type of control terminal for controlling the NCR apparatus 500A, is introduced. That is, the NCR apparatus 500A includes an NCR-Fwd (Forward) 510A, which is a type of a relay device that relays a radio signal transmitted between the gNB 200 and the UE 100, specifically, changes a propagation state of the radio signal without demodulating or modulating the radio signal, and an NCR-MT 520A that performs wireless communication with the gNB 200 to control the NCR-Fwd 510A.

Thus, the NCR-MT 520A controls the NCR apparatus 500A in cooperation with the gNB 200 by establishing a wireless connection to the gNB 200 and performing wireless communication to the gNB 200. Accordingly, efficient coverage extension can be realized using the NCR apparatus 500A. The NCR-MT 520A controls the NCR apparatus 500A according to control from the gNB 200. The NCR-MT 520A also has the same and/or similar function as that of the UE 100.

The NCR-MT 520A may be configured separately from the NCR-Fwd 510A. For example, the NCR-MT 520A may be located near the NCR-Fwd 510A and may be electrically connected to the NCR-Fwd 510A. The NCR-MT 520A may be connected to the NCR-Fwd 510A by wire or wireless. The NCR-MT 520A may be configured integrally with the NCR-Fwd 510A. The NCR-MT 520A and the NCR-Fwd 510A may be fixedly installed at a coverage edge (cell edge) of the gNB 200, or on a wall surface or window of any building, for example. The NCR-MT 520A and the NCR-Fwd 510A may be installed, for example, in a vehicle or the like and may be mobile. One NCR-MT 520A may control the plurality of NCR-Fwds 510A.

The configuration is not limited to a configuration in which the NCR-MT 520A directly controls one or more NCR-Fwds 510A, and may be configuration in which the NCR-MT 520A indirectly controls one or more NCR-Fwds 510A. For example, the NCR-MT 520A may control one or more NCR-Fwds 510A via an upper layer (for example, an application layer).

In the example illustrated in FIG. 5, the NCR apparatus 500A (NCR-Fwd 510A) dynamically or quasi-statically changes a beam to be transmitted or received. For example, the NCR-Fwd 510A forms a beam toward each of a UE 100a and a UE 100b. The NCR-Fwd 510A may also form a beam toward the gNB 200. For example, in a communication resource between the gNB 200 and the UE 100a, the NCR-Fwd 510A transmits a radio signal received from the gNB 200 toward the UE 100a through beamforming and/or transmits a radio signal received from the UE 100a toward the gNB 200 through beamforming. In a communication resource between the gNB 200 and the UE 100b, the NCR-Fwd 510A transmits the radio signal received from the gNB 200 toward the UE 100b through beamforming and/or transmits the radio signal received from the UE 100b toward the gNB 200 through beamforming. Instead of or in addition to the beam forming, the NCR-Fwd 510A may perform null forming (so-called null steering) toward the UE 100 which is not a communication partner (not illustrated) and/or a neighboring gNB 200 (not illustrated) to curb interference.

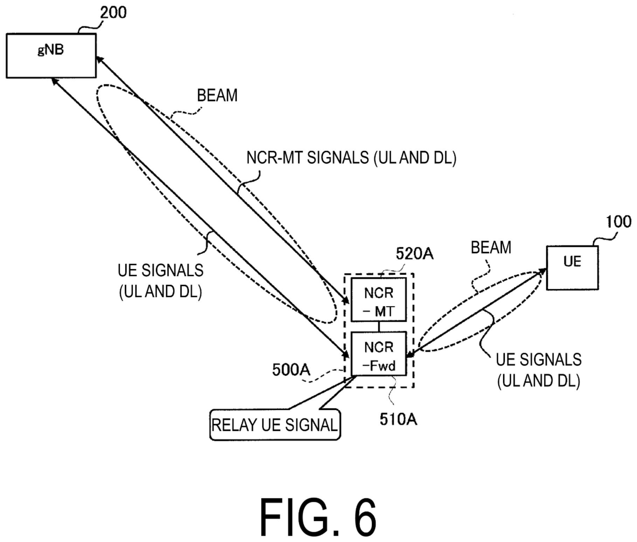

FIG. 6 is a diagram illustrating an example of a control method for the NCR apparatus 500A according to the embodiment.

The NCR-Fwd 510A relays radio signals (also referred to as "UE signals") between the gNB 200 and the UE 100. The UE signal includes an uplink signal transmitted from the UE 100 to the gNB 200 (also referred to as "UE-UL signal") and a downlink signal transmitted from the gNB 200 to the UE 100 (also referred to as "UE-DL signal"). The NCR-Fwd 510A relays the UE-UL signal from the UE 100 to the gNB 200 and relays the UE-DL signal from the gNB 200 to the UE 100. A radio link between the NCR-Fwd 510A and the UE 100 is also referred to as an "access link". A radio link between the NCR-Fwd 510A and the gNB 200 is also referred to as a "backhaul link".

The NCR-MT 520A transmits and/or receives a radio signal (herein referred to as an "NCR-MT signal") to and from the gNB 200. The NCR-MT signal includes an uplink signal transmitted from the NCR-MT 520A to the gNB 200 (referred to as an "NCR-MT-UL signal"), and a downlink signal transmitted from the gNB 200 to the NCR-MT 520A (referred to as an "NCR-MT-DL signal"). The NCR-MT-DL signal includes signaling for controlling the NCR apparatus 500A (for example, an NCR control signal). A wireless link between the NCR-MT 520A and the gNB 200 is also referred to as a "control link."

The gNB 200 directs a beam to the NCR-MT 520A based on the NCR-MT-UL signal from the NCR-MT 520A. Since the NCR apparatus 500A and the NCR-MT 520A are co-located, the beam is also eventually directed to the NCR-Fwd 510A when the backhaul link and the control link have the same frequency and the gNB 200 directs a beam to the NCR-MT 520A. The gNB 200 transmits the NCR-MT-DL signal and the UE-DL signal using the beam. The NCR-MT 520A receives the NCR-MT-DL signal. When the NCR-Fwd 510A and the NCR-MT 520A are at least partially integrated, a function (for example, antennas) for transmitting and/or receiving, or relaying UE signals and/or NCR-MT signals may be integrated in the NCR-Fwd 510A and the NCR-MT 520A. The beam includes a transmission beam and/or a reception beam. The beam is a general term for transmission and/or reception under control for maximizing power of a transmission wave and/or a reception wave in a specific direction by adjusting/adapting an antenna weight or the like.

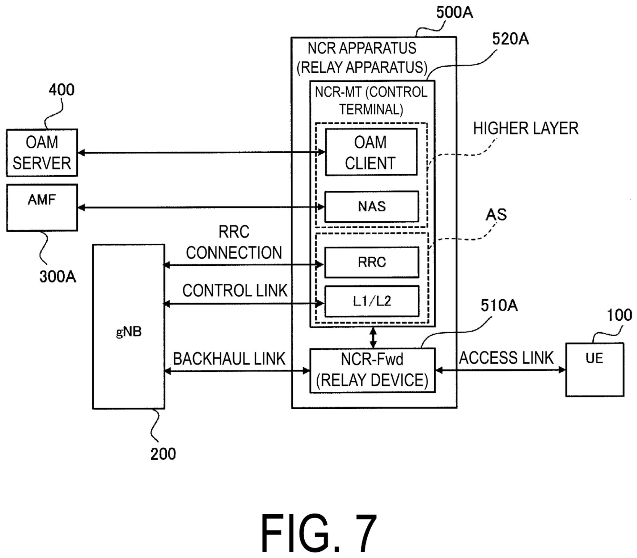

FIG. 7 is a diagram illustrating an example of a configuration of a protocol stack in the NCR apparatus 500A according to the embodiment.

The NCR-Fwd 510A relays a radio signal transmitted and/or received between the gNB 200 and the UE 100. The NCR-Fwd 510A has a Radio Frequency (RF) function of amplifying and relaying a received radio signal, and performs directional transmission through beamforming (for example, analog beamforming).

The NCR-MT 520A includes entities of the layer 1 and/or the layer 2 (L1/L2), and each layer of the RRC and the NAS. The L1/L2 (in particular, PHY, MAC) and the RRC of the NCR-MT 520A are also referred to as "AS of the NCR-MT 520A ".

The NCR-MT 520A may include at least one selected from the group consisting of an operation, administration, maintenance (OAM) client communicating with an OAM server 400, a NAS layer communicating with the AMF 300A, and an F1 application protocol (AP) layer. The OAM client, the NAS layer, and the F1-AP layer of the NCR-MT 520A are also referred to as "upper layers of the NCR-MT 520A" with reference to the AS of the NCR-MT 520A.

A backhaul link is established between the gNB 200 and the NCR-Fwd 510A. An access link is established between the UE 100 and the NCR-Fwd 510A. The NCR-Fwd 510A relays a radio signal transmitted between the gNB 200 and the UE 100 via the backhaul link and the access link. The NCR-Fwd 510A changes a propagation state of the radio signal without demodulating or modulating the radio signal.

A control link is established between the gNB 200 and the L1/L2 of the NCR-MT 520A. The L1/L2 of the NCR-MT 520A transmits and/or receives L1/L2 signaling to and from the gNB 200 via the control link. An RRC connection is established between the gNB 200 and the RRC of the NCR-MT 520A. The RRC of the NCR-MT 520A transmits and/or receives an RRC message to and from the gNB 200 via the RRC connection. The NCR-MT 520A receives downlink signaling (also referred to as an "NCR control signal" or simply "control signal") from the gNB 200 via the RRC connection and/or the control link.

The gNB 200 (transmitter 210) transmits the NCR control signal to the NCR-MT 520A. The NCR control signal may be an RRC message, which is a control signal of the RRC layer (that is, layer 3). The NCR control signal may be a MAC control element (CE), which is a control signal of the MAC layer (that is, layer 2). The NCR control signal may be downlink control information (DCI), which is a control signal of the PHY layer (that is, layer 1). The NCR control signal may be UE-specific signaling. The NCR control signal may be broadcast signaling. The NCR control signal may be a fronthaul message (for example, F1-AP message). When the NCR-MT 520A is a type or part of a base station, the NCR-MT 520A may communicate with the gNB 200 via an AP of Xn (Xn-AP), which is an inter-base station interface.

Hereinafter, the NCR control signal transmitted in the RRC message (and/or MAC CE) and used for static or semi-static control of the NCR-Fwd 510A is also referred to as "NCR configuration information (NCR configuration)" or simply "configuration information". Such configuration information may be referred to as "side control configuration". Here, the RRC message may be an RRC reconfiguration message. The NCR configuration information includes, for example, information for configuring ON/OFF of the NCR-Fwd 510A. The NCR configuration information may include, for example, information for semi-static beam configuration of the NCR-Fwd 510A.

On the other hand, the NCR control signal transmitted in the L1/L2 signaling, that is, the DCI (and/or MAC CE) and used for dynamic control of the NCR-Fwd 510A is also referred to as "NCR control information" or simply "control information". The NCR control information may be referred to as "side control information". CRC bits of the PDCCH carrying the NCR control information are scrambled by a newly introduced dedicated RNTI. The dedicated RNTI is also referred to as "NCR-RNTI". The NCR control information may include, for example, information for dynamic beam control of the NCR-Fwd 510A. The NCR configuration information may include information for instructing dynamic On/Off of the NCR-Fwd 510A.

For example, when the NCR-MT 520A is in an RRC connected state, the NCR apparatus 500A can turn on or off the NCR-Fwd 510A according to the NCR control information received from the gNB 200. On the other hand, after the NCR-MT 520A transitions to an RRC inactive state, the NCR apparatus 500A can turn on or off the NCR-Fwd 510A in accordance with the latest (last) configuration information received from the gNB 200.

Further, the NCR control signal (for example, NCR configuration information by RRC and/or NCR control information by L1/L2 signaling) held by the NCR apparatus 500A (NCR-MT 520A) may be referred to as an NCR-Fwd context.

When a radio link failure (RLF) with the gNB 200 is detected by the NCR-MT 520A, the NCR-MT 520A executes cell selection and triggers RRC connection re-establishment (also referred to as "RRC re-establishment"). Here, when the NCR-MT 520A enters the RRC idle state because a suitable cell cannot be found in the cell selection, the NCR apparatus 500A turns off the NCR-Fwd 510A. The NCR-Fwd 510A is off during an RRC connection re-establishment procedure.

The NCR control signal may include frequency control information designating a center frequency of a radio signal (for example, a component carrier) that is a relay target in the NCR-Fwd 510A. When the NCR control signal received from the gNB 200 includes the frequency control information, the NCR-MT 520A (controller 523) controls the NCR-Fwd 510A such that the NCR-Fwd 510A relays a radio signal whose center frequency is indicated by the frequency control information as a target (step S2A). The NCR control signal may include a plurality of pieces of frequency control information designating center frequencies different from each other. Since the NCR control signal includes the frequency control information, the gNB 200 can designate the center frequency of the radio signal to be relayed by the NCR-Fwd 510A via the NCR-MT 520A.

The NCR control signal may include mode control information designating an operation mode of the NCR-Fwd 510A. The mode control information may be associated with the frequency control information (center frequency). The operation mode may be any one of a mode in which the NCR-Fwd 510A performs non-directional transmission and/or reception, a mode in which the NCR-Fwd 510A performs fixed-directional transmission and/or reception, a mode in which the NCR-Fwd 510A performs transmission and/or reception with a variable directional beam, and a mode in which the NCR-Fwd 510A performs Multiple Input Multiple Output (MIMO) relay transmission. The operation mode may be either a beamforming mode (that is, a mode in which improvement of a desired wave is emphasized) and a null steering mode (that is, a mode in which curbing of an interference wave is emphasized). When the NCR control signal received from the gNB 200 includes the mode control information, the NCR-MT 520A (controller 523) controls the NCR-Fwd 510A such that the NCR-Fwd 510A operates in the operation mode indicated by the mode control information (step S2A). Since the NCR control signal includes the mode control information, the gNB 200 can designate the operation mode of the NCR-Fwd 510A via the NCR-MT 520A.

Here, a mode in which the NCR apparatus 500A performs omnidirectional transmission and/or reception is a mode in which the NCR-Fwd 510A performs relaying in all directions, and may be referred to as an omni mode. The mode in which the NCR-Fwd 510A performs fixed-directional transmission and/or reception may be a directivity mode realized by one directional antenna. The mode may be a beamforming mode realized by applying fixed phase and amplitude control (antenna weight control) to a plurality of antennas. Any of these modes may be designated (set) from the gNB 200 to the NCR-MT 520A. The mode in which the NCR-Fwd 510A performs transmission and/or reception with a variable directional beam may be a mode for performing analog beamforming. The mode may be a mode in which digital beamforming is performed. The mode may be a mode in which hybrid beamforming is performed. The mode may be a mode for forming an adaptive beam specific to the UE 100. Any of these modes may be designated (set) from the gNB 200 to the NCR-MT 520A. In the operation mode in which beamforming is performed, beam control information to be described below may be provided from the gNB 200 to the NCR-MT 520A. The mode in which the NCR apparatus 500A performs MIMO relay transmission may be a mode for performing single-user (SU) spatial multiplexing. The mode may be a mode for performing Multi-User (MU) spatial multiplexing. The mode may be a mode for performing transmission diversity. Any of these modes may be designated (set) from the gNB 200 to the NCR-MT 520A. The operation mode may include a mode in which relay transmission by the NCR-Fwd 510A is turned on (activated) and a mode in which the relay transmission by the NCR-Fwd 510A is turned off (deactivated). Any of these modes may be designated (set) from the gNB 200 to the NCR-MT 520A in the NCR control signal.

The NCR control signal may include beam control information designating a transmission direction, a transmission weight, or a beam pattern when the NCR-Fwd 510A performs directional transmission. The beam control information may be associated with the frequency control information (center frequency). The beam control information may include a precoding matrix indicator (PMI). The beam control information may include beam forming angle information. When the NCR control signal received from the gNB 200 includes beam control information, the NCR-MT 520A (controller 523) controls the NCR-Fwd 510A to form a transmission directivity (beam) indicated by the beam control information. When the NCR control signal includes the beam control information, the gNB 200 can control the transmission directivity of the NCR apparatus 500A via the NCR-MT 520A.

The NCR control signal may include output control information designating a degree to which the NCR-Fwd 510A amplifies the radio signal (amplification gain) or the transmission power. The output control information may be information indicating a difference value (that is, a relative value) between a current amplification gain or transmission power and a target amplification gain or transmission power. When the NCR control signal received from the gNB 200 includes output control information, the NCR-MT 520A (controller 523) controls the NCR-Fwd 510A so that the NCR-Fwd 510A performs change to the amplification gain or transmission power indicated by the output control information. The output control information may be associated with frequency control information (center frequency). The output control information may be information designating any one of an amplification gain, a beamforming gain, and an antenna gain of the NCR-Fwd 510A. The output control information may be information designating transmission power of the NCR-Fwd 510A.

When one NCR-MT 520A controls the plurality of NCR-Fwds 510A, the gNB 200 (transmitter 210) may transmit an NCR control signal to the NCR-MT 520A for each NCR-Fwd 510A. In this case, the NCR control signal may include an identifier of the corresponding NCR-Fwd 510A (NCR identifier). The NCR-MT 520A (controller 523) controlling the plurality of NCR-Fwds 510A determines the NCR-Fwd 510A to which the NCR control signal is applied, based on the NCR identifier included in the NCR control signal received from the gNB 200. The NCR identifier may be transmitted together with the NCR control signal from the NCR-MT 520A to the gNB 200 even when the NCR-MT 520A controls only one NCR-Fwd 510A.

Thus, the NCR-MT 520A (controller 523) controls the NCR-Fwd 510A based on the NCR control signal from the gNB 200. This enables the gNB 200 to control the NCR-Fwd 510A via the NCR-MT 520A.

### (1.3) Example of Configuration of Each Apparatus

An example of a configuration of each apparatus in the mobile communication system 1 according to the embodiment is described.

### (1.3.1) Example of Configuration of Relay Apparatus

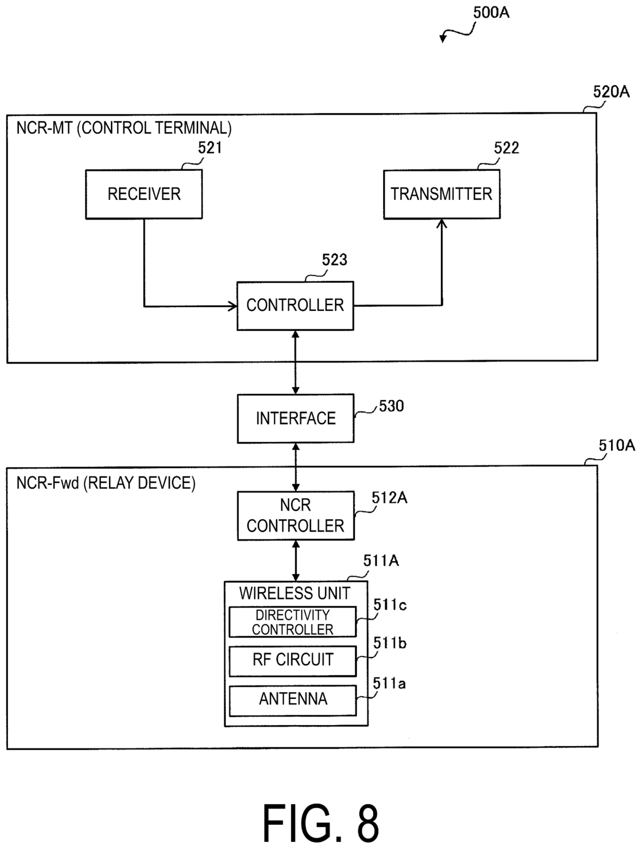

FIG. 8 is a diagram illustrating an example of a configuration of the NCR apparatus 500A (relay apparatus) according to the embodiment. The NCR apparatus 500A includes an NCR-Fwd 510A, an NCR-MT 520A, and an interface 530.

The NCR-Fwd 510A includes a wireless unit 511A and an NCR controller 512A. The wireless unit 511A includes an antenna 511a including a plurality of antennas (a plurality of antenna elements), an RF circuit 511b including an amplifier, and a directivity controller 511c that controls directivity of the antenna 511a. The RF circuit 511b amplifies and relays (transmits) radio signals transmitted and/or received by the antenna 511a. The RF circuit 511b may convert a radio signal, which is an analog signal, into a digital signal, and reconvert the digital signal into an analog signal after digital signal processing. The directivity controller 511c may perform analog beamforming through analog signal processing. The directivity controller 511c may perform digital beamforming through digital signal processing. The directivity controller 511c may perform analog and digital hybrid beamforming. The NCR controller 512A controls the wireless unit 511A in response to a control signal from the NCR-MT 520A. The NCR controller 512A may include at least one processor.

The NCR-MT 520A includes a receiver 521, a transmitter 522, and a controller 523. The receiver 521 performs various types of reception under control of the controller 523. The receiver 521 includes an antenna and a reception device. The reception device converts a radio signal received by the antenna (radio signal) into a baseband signal (a reception signal) and outputs the reception signal to the controller 523. The transmitter 522 performs various types of transmission under control of the controller 523. The transmitter 522 includes an antenna and a transmission device. The transmission device converts a baseband signal (a transmission signal) output by the controller 523 into a radio signal and transmits the radio signal from the antenna. The controller 523 performs various types of controls in the NCR-MT 520A. The operation of the NCR-MT 520A (and the NCR apparatus 500A) described above and to be described below may be an operation controlled by the controller 523. The controller 523 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing. The controller 523 executes a function of at least one layer selected from the group consisting of the PHY, the MAC, the RRC, and the F1-AP.

The interface 530 electrically or logically connects the NCR-Fwd 510A and the NCR-MT 520A. The controller 523 of the NCR-MT 520A controls the NCR-Fwd 510A via the interface 530. The interface 530 may be a logical entity of an upper layer (for example, an application layer).

In an embodiment, the receiver 521 of the NCR-MT 520A receives signaling (NCR control signal) used to control the NCR apparatus 500A from the gNB 200 through wireless communication. The controller 523 of the NCR-MT 520A controls the NCR apparatus 500A based on the signaling. This enables the gNB 200 to control the NCR-Fwd 510A via the NCR-MT 520A.

### (1.3.2) Example of Configuration of User Equipment

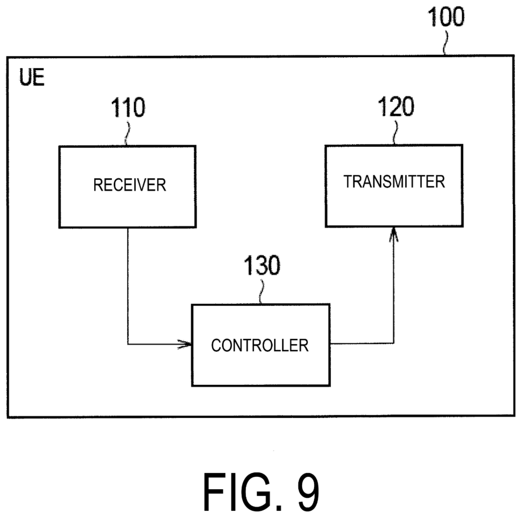

FIG. 9 is a diagram illustrating a configuration of the UE 100 (user equipment) according to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. Such processing includes processing of respective layers to be described later. The operations of the UE 100 described above and to be described below may also be an operation under the control of the controller 130. The controller 130 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

### (1.3.3) Example of Configuration of Base Station

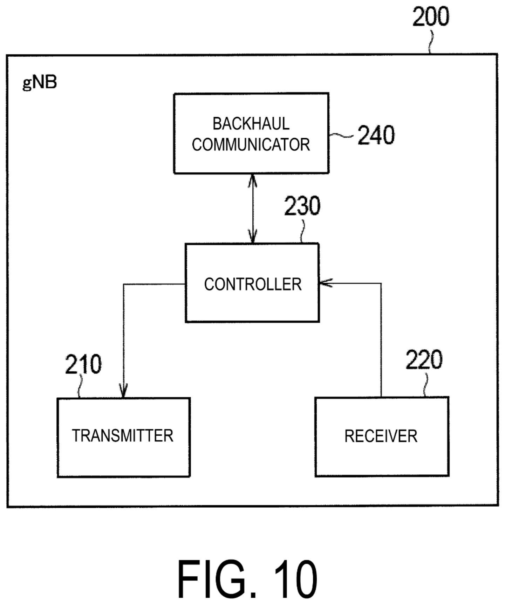

FIG. 10 is a diagram illustrating an example of a configuration of the gNB 200 (base station) according to the embodiment. The gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a reception signal) and outputs the resulting signal to the controller 230. The transmitter 210 and the receiver 220 may be capable of beamforming using a plurality of antennas.

The controller 230 performs various types of control for the gNB 200. The operations of the gNB 200 described above and below may be also performed under the control of the controller 230. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. The gNB may include a Central Unit (CU) and a Distributed Unit (DU) (that is, functions are divided), and both units may be connected via an F1 interface.

In the embodiment, the transmitter 210 of the gNB 200 transmits signaling (NCR control signal) used for control of the NCR-Fwd 510A to the NCR-MT 520A through wireless communication. This enables the gNB 200 to control the NCR apparatus 500A via the NCR-MT 520A.

### (1.4) Operation according to First Embodiment

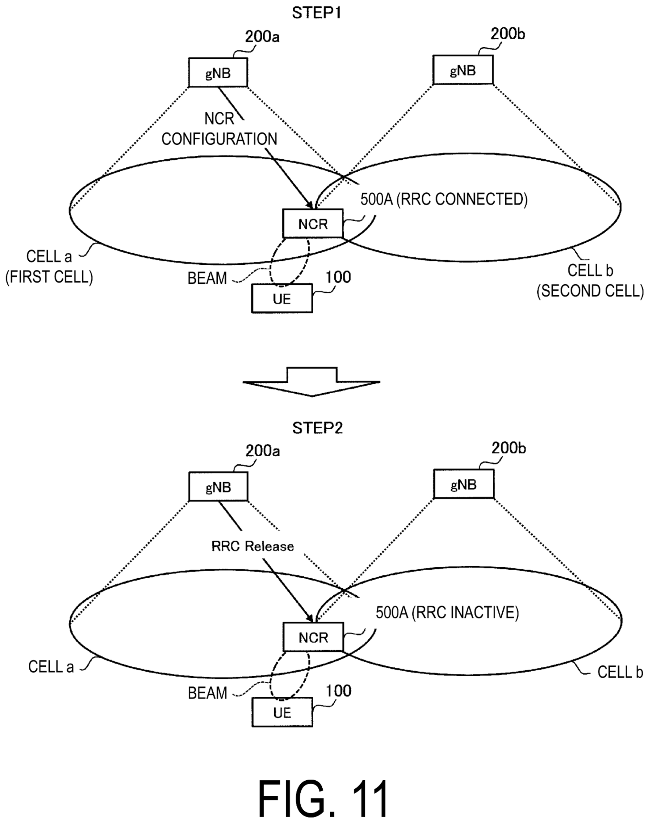

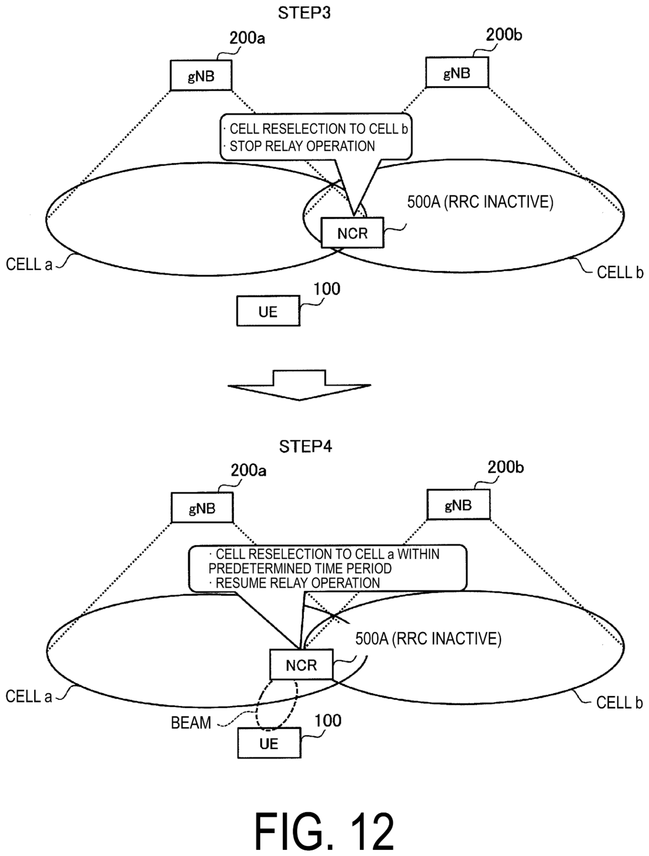

FIGs. 11 and 12 are diagrams illustrating operations of the mobile communication system 1 according to the first embodiment.

As illustrated in STEP 1 of FIG. 11, the NCR apparatus 500A is in the RRC connected state in a cell a (a first cell) of a gNB 200a. The gNB 200a transmits the RRC Reconfiguration message including the NCR configuration to the NCR apparatus 500A. The NCR apparatus 500A receives the RRC Reconfiguration message including the NCR configuration from the gNB 200a (cell a), and performs a relay operation by use of the NCR configuration.

In the present embodiment, the NCR configuration includes a periodic beam indication. In the periodic beam indication, the period configuration and the beam configuration are made by the RRC. The NCR apparatus 500A performs periodic beamforming based on the periodic beam indication.

As illustrated in STEP 2 of FIG. 11, the gNB 200a transmits an RRC Release message including a suspend configuration to the NCR apparatus 500A. The NCR apparatus 500A receives the RRC Release message from the gNB 200a (cell a), and transitions to the RRC inactive state.

In the present embodiment, the RRC Release message for causing the NCR-MT 520A to transition from the RRC connected state to the RRC inactive state includes a timer value.

After the NCR-MT 520A transitions to the RRC inactive state, the NCR-MT 520A controls the NCR-Fwd 510A in accordance with the latest (last) NCR configuration. In the present embodiment, the NCR-MT 520A controls the NCR-Fwd 510A to continue the periodic beamforming operation in accordance with the NCR configuration (latest configuration) received in STEP 1.

As illustrated in STEP 3 of FIG. 12, the NCR-MT 520A in the RRC inactive state performs cell reselection from the cell a (first cell) to a cell b (second cell). The NCR-MT 520A turns off the NCR-Fwd 510A (or stops the relay operation) in response to the cell reselection to the cell b (second cell).

In the present embodiment, the NCR-MT 520A starts a timer with the above-described timer value being set in response to performing the cell reselection from the cell a to the cell b. At least while the timer is running, the NCR-MT 520A holds the NCR configuration (latest configuration) without discarding it even if the NCR-Fwd 510A is off.

In the illustrated example, the cell b is managed by a gNB 200b which is different from the gNB 200a managing the cell a. However, the cell a and the cell b may be managed by the same gNB 200.

As illustrated in STEP 4 of FIG. 12, when the NCR-MT 520A performs the cell reselection to the cell a within a predetermined time period after performing the cell reselection to the cell b, the NCR-MT 520A resumes the relay operation by use of the NCR configuration (latest configuration). To be more specific, when the NCR-MT 520A performs the cell reselection to the cell a before the timer expires, the NCR-MT 520A resumes the periodic beamforming by use of the NCR configuration (latest configuration).

In this way, when the NCR-MT 520A in the RRC inactive state reselects another cell and then reselects the original cell within a predetermined period time, the NCR-MT 520A restores (turns on) the operation of the NCR-Fwd 510A in accordance with the latest configuration. On the other hand, when the NCR-MT 520A in the RRC inactive state reselects another cell and then reselects the original cell after a predetermined time period elapses, the NCR-MT 520A continues to turn off the NCR-Fwd 510A.

By doing so, when the NCR-MT 520A returns to the original cell after temporarily camping on another cell, the NCR-MT 520A can autonomously resume the relay operation, and thus, can efficiently control the relay operation.

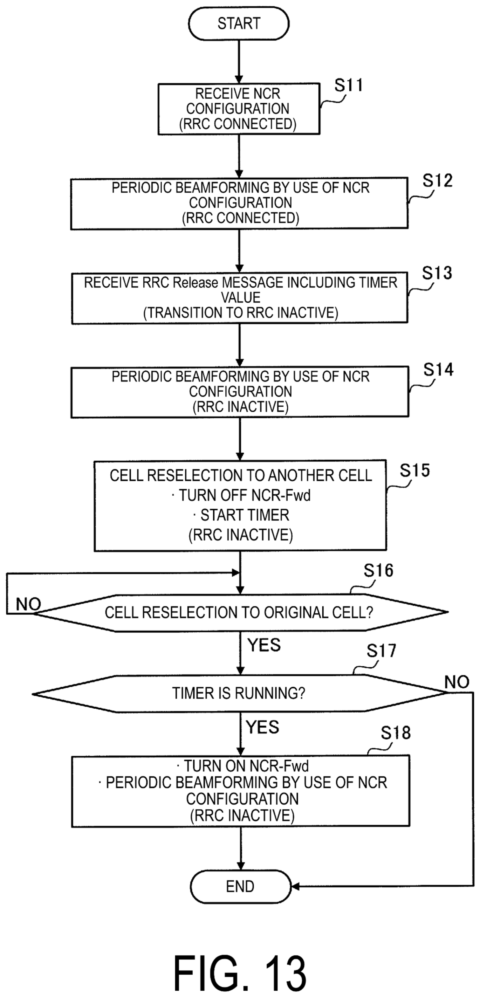

FIG. 13 is a flowchart illustrating an example of an operation of the NCR apparatus 500A according to the first embodiment.

In step S11, the NCR-MT 520A in the RRC connected state receives the NCR configuration from the gNB 200. The NCR configuration includes the periodic beam indication. The NCR-MT 520A may store a cell ID of the serving cell (cell a) when the NCR configuration is made.

In step S12, the NCR-MT 520A in the RRC connected state performs the relay operation involving the periodic beamforming by use of the NCR configuration received in step S11.

In step S13, the NCR-MT 520A in the RRC connected state receives the RRC Release message including the timer value from the gNB 200. The RRC Release message includes the suspend configuration, and the NCR-MT 520A transitions to the RRC inactive state in accordance with the suspend configuration.

In step S14, the NCR-MT 520A in the RRC inactive state continues the relay operation involving the periodic beamforming by use of the NCR configuration received in step S11.

In step S15, the NCR-MT 520A in the RRC inactive state performs the cell reselection to another cell (cell b). The NCR-MT 520A in the RRC inactive state turns off the NCR-Fwd 510A and starts the timer with the timer value received in step S13 being set in response to the cell reselection to another cell (cell b).

In step S16, the NCR-MT 520A determines whether to perform the cell reselection to the original cell (cell a) that is the cell for which the NCR configuration has been made. Note that the NCR-MT 520A may identify the original cell by comparing the stored cell ID with the cell ID of the reselected cell.

When performing the cell reselection to the original cell (cell a) (step S16: YES), in step S17, the NCR-MT 520A determines whether the timer started in step S15 is running (not yet expired). When the timer is determined to have expired (step S17: NO), the NCR-MT 520A keeps the NCR-Fwd 510A OFF. The NCR-MT 520A may discard the NCR configuration (latest configuration) that the NCR-MT 520A holds when the timer expires.

On the other hand, when the timer is determined to be running (step S17: YES), in step S18, the NCR-MT 520A turns on NCR-Fwd 510A and resumes the relay operation involving the periodic beamforming by use of the NCR configuration (latest configuration).

### (2) Second Embodiment

A second embodiment is described mainly focusing on differences from the first embodiment. The second embodiment is an embodiment related to beam failure detection and recovery performed by the NCR-MT 520A. Note that the second embodiment may be performed separately and independently from the first embodiment. The second embodiment may be implemented in combination with the first embodiment.

### (2.1) Overview of Beam Failure Detection and Recovery

An overview of general beam failure detection and recovery is described. General beam failure detection (also referred to as "BFD") and beam failure recovery (also referred to as "BFR") are performed by the UE 100 in the RRC connected state. For the beam failure detection, the gNB 200 configures an SSB or a channel state information (CSI)-RS as a BFD reference signal (RS) for the UE 100. The MAC entity of the UE 100 in the RRC connected state declares (detects) a beam failure when the number of beam failure instance indications from the physical layer reaches a threshold (maximum count value) configured by the gNB 200 before the timer configured by the gNB 200 expires.

After the beam failure is detected in a primary cell (PCell), the MAC entity of the UE 100 performs the following:
- triggering the BFR by initiating a random access procedure in the PCell;
- selecting an appropriate beam to perform the BFR (when the gNB 200 provides a dedicated random access resource for a particular beam, it is prioritized by UE 100);
- including a beam failure indication in the PCell in a beam failure recovery (BFR) MAC control element (CE) when the random access procedure includes contention-based random access,

When the random access procedure is completed, the UE 100 considers that the BFR in the PCell is completed.

On the other hand, the NCR apparatus 500A may continue the relay operation in accordance with the latest NCR configuration even if the NCR-MT 520A transitions from the RRC connected state to the RRC inactive state, as described above. Therefore, the NCR-MT 520A even in the RRC inactive state is desired to be able to perform the BFD and the BFR. For example, a method is conceivable in which, when the NCR-MT 520A is in the RRC inactive state and the NCR-Fwd 510A is ON, the NCR apparatus 500A turns off the NCR-Fwd 510A in response to detecting a beam failure with the gNB 200.

In the second embodiment described below, an operation is described that can appropriately control the BFD and the BFR performed by the NCR-MT 520A in the RRC inactive state.

### (2.2) Operation according to Second Embodiment

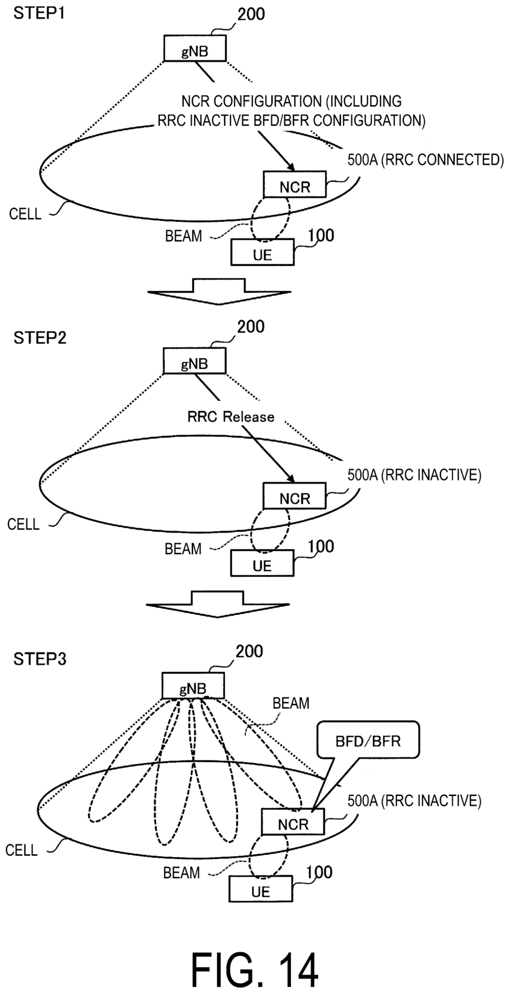

FIG. 14 is a diagram for explaining an operation of a mobile communication system 1 according to the second embodiment.

As illustrated in STEP 1 of FIG. 14, the NCR apparatus 500A is in the RRC connected state in a cell of the gNB 200. The gNB 200 transmits the RRC Reconfiguration message including the NCR configuration to the NCR apparatus 500A. The NCR apparatus 500A receives the RRC Reconfiguration message including the NCR configuration from the gNB 200, and performs the relay operation by use of the NCR configuration. The NCR configuration may include the periodic beam indication. That is, the NCR configuration includes information for configuring to perform the relay operation involving the periodic beamforming, and the NCR-Fwd 510A is configured to be turned on. Such configuration information is an example of first configuration information regarding the relay operation. The NCR-MT 520A receives the first configuration information regarding the relay operation from the gNB 200.

As illustrated in STEP 2 of FIG. 14, the gNB 200 transmits the RRC Release message including the suspend configuration to the NCR apparatus 500A. The NCR apparatus 500A receives the RRC Release message from the gNB 200, and transitions to the RRC inactive state.

In the present embodiment, the RRC Reconfiguration message transmitted from the gNB 200 to the NCR-MT 520A in STEP 1 or the RRC Release message transmitted from the gNB 200 to the NCR-MT 520A in STEP 2 includes second configuration information regarding whether the NCR-MT 520A in the RRC inactive state performs beam failure detection (BFD) processing with respect to the gNB 200. That is, the NCR-MT 520A receives, from the gNB 200, the second configuration information regarding whether the NCR-MT 520A in the RRC inactive state performs the beam failure detection processing with respect to the gNB 200.

However, the gNB 200 may provide the second configuration information to the NCR-MT 520A through broadcast signaling, instead of providing the second configuration information to the NCR-MT 520A through such dedicated signaling. For example, the gNB 200 may transmit a system information block (SIB) including the second configuration information to the UE 100.

As illustrated in STEP 3 of FIG. 14, after the NCR-MT 520A transitions to the RRC inactive state, the NCR-MT 520A controls the NCR-Fwd 510A in accordance with the latest NCR configuration. In the present embodiment, the NCR-MT 520A the NCR-MT 520A in the RRC inactive state controls the relay operation (NCR-Fwd 510A) based on the first configuration information and controls the BFD (and the BFR) based on the second configuration information.

As described above, in the present embodiment, the NCR-MT 520A receives, from the gNB 200, the second configuration information regarding whether the NCR-MT 520A in the RRC inactive state performs the beam failure detection processing with respect to the gNB 200. The NCR-MT 520A in the RRC inactive state controls the BFD (and the BFR) based on the second configuration information. This makes it possible to appropriately control the BFD (and BFR) performed by the NCR-MT 520A in the RRC inactive state.

Note that the basic operation of the BFD performed by the NCR-MT 520A in the RRC inactive state may be an operation to which the general BFD is applied. The MAC entity of the NCR-MT 520A in the RRC inactive state may perform the BFD by continuously using the BFD reference signal (RS), the timer value, and the maximum count value that are configured from the gNB 200 when the NCR-MT 520A is in the RRC connected state. Specifically, the MAC entity of the NCR-MT 520A in the RRC inactive state declares (detects) a beam failure when the number of beam failure instance indications from the physical layer reaches the threshold (maximum count value) configured by the gNB 200 before the timer configured by the gNB 200 expires.

At least one selected from the group consisting of the reference signal (RS), the timer value, and the maximum count value for the RRC inactive state may be a parameter independent of the reference signal (RS), the timer value, and the maximum count value for the RRC connected state. The second configuration information may include information for configuring at least one selected from the group consisting of the reference signal (RS), the timer value, and the maximum count value for the RRC inactive state. When the second configuration information includes such information, the NCR-MT 520A may consider to be designated (configured) to perform the BFD when being in the RRC inactive state.

In the present embodiment, the second configuration information may include information designating whether the NCR-MT 520A in the RRC inactive state performs the detection processing (BFD). That is, the gNB 200 may configure for the NCR-MT 520A whether the NCR-MT 520A in the RRC inactive state performs the BFD.

In the present embodiment, the NCR-MT 520A, when being is in the RRC inactive state, may initiate an RRC connection resumption for the NCR-MT 520A to transition to the RRC connected state in response to the beam failure being detected in the detection processing (BFD). That is, the NCR-MT 520A in the RRC inactive state, when detecting the beam failure, may perform the RRC connection resumption to transition to the RRC connected state. For example, the NCR-MT 520A, once initiating the RRC connection resumption, selects an available beam before transmitting a random access preamble (Msg1) on a physical random access channel (PRACH), and performs Msg1 transmission using a PRACH resource associated with the beam (SSB index). The gNB 200 grasps the beam (SSB index) selected by NCR-MT 520A from the resource on which Msg1 is received, and transmits a random access response (Msg2) using an antenna weight corresponding to the beam. Msg2 includes an UL grant, and the NCR-MT 520A transmits an RRC Resume Request message (Msg3) to the gNB 200. The NCR-MT 520A receives an RRC Resume message (Msg 4) from the gNB 200 and transitions to the RRC connected state.

In the present embodiment, the second configuration information may include information designating whether to continue the relay operation when the NCR-MT 520A in the RRC inactive state detects the beam failure. For example, when the beam failure is detected in the RRC inactive state, the gNB 200 may configure whether the NCR-Fwd 510A is to be turned off or to be continued to be ON for the NCR-MT 520A.

In the present embodiment, when the NCR-MT 520A is in the RRC inactive state, the NCR-MT 520A may stop the relay operation in response to the beam failure being detected in the detection processing (BFD) and a candidate beam satisfying a predetermined quality criterion failing to be specified. For example, when the NCR-MT 520A in the RRC inactive state detects the beam failure and fails to capture a new beam satisfying the quality criteria (within a certain time period time or within a certain number of times of recovery attempts), the NCR-MT 520A may turn off the NCR-Fwd 510A.

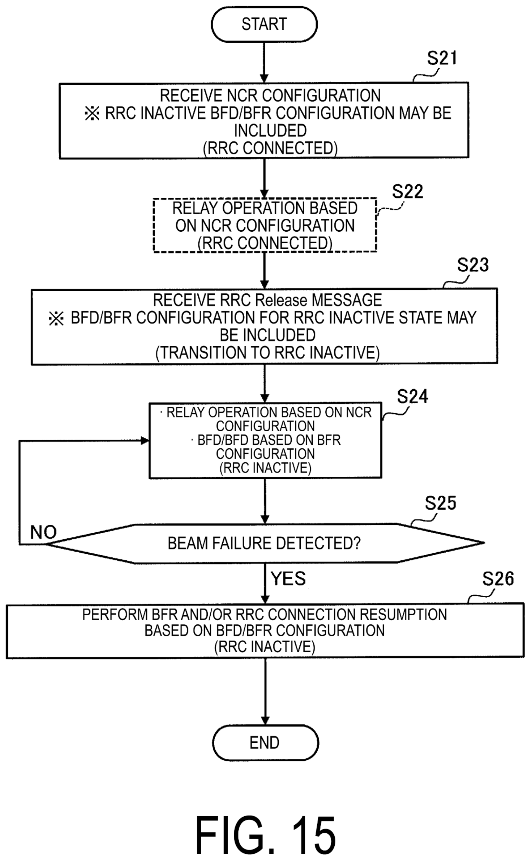

FIG. 15 is a flowchart illustrating an example of an operation of the NCR apparatus 500A according to the second embodiment.

In step S21, the NCR-MT 520A receives the RRC Reconfiguration message including the NCR configuration from the gNB 200. The NCR configuration includes the first configuration information regarding the relay operation. The first configuration information includes configuration information indicating that the NCR-Fwd 510A is to be turned on. The first configuration information may include the periodic beam indication. The NCR configuration may further include the second configuration information regarding whether the NCR-MT 520A in the RRC inactive state performs the beam failure detection (BFD) processing with respect to the gNB 200. Hereinafter, the second configuration information is also referred to as "BFD/BFR configuration for RRC inactive state".

In step S22, the NCR-MT 520A in the RRC connected state may perform the relay operation using the NCR-Fwd 510A in the on state, based on the first configuration information included in the NCR configuration received in step S11.

In step S23, the NCR-MT 520A in the RRC connected state receives the RRC Release message including the suspend configuration from the gNB 200. The NCR-MT 520A transitions to the RRC inactive state in accordance with the suspend configuration. The RRC Release message may include the BFD/BFR configuration for the RRC inactive state (second configuration information).

The BFD/BFR configuration for the RRC inactive state includes at least one configuration information selected from the group consisting of a) to c) below.
A) Configuration of whether to perform the BFD in the RRC inactive state.
B) Configuration of processing when detecting a beam failure in the RRC inactive state:
   For example, the configuration may include information designating whether to perform the RRC connection resumption when detecting a beam failure in the RRC inactive state.
   b1) When not performing the RRC connection resumption, the configuration may include information designating whether to turn off the NCR-Fwd 510A while continuing the RRC inactive state, or to keep the NCR-Fwd 510A ON in accordance with the latest configuration.
   b2) When not performing the RRC connection resumption, the configuration may include information designating whether to perform the BFR.
   b3) When performing the BFR, the configuration may include a parameter designating a condition until a BFR failure is determined. The parameter may include a timer value for the determination and/or an upper limit value of the number of times of trials for the determination. In this case, the NCR-MT 520A in the RRC inactive state may determine that the BFR is failed in response to that a candidate beam satisfying the predetermined quality criteria cannot be found (captured) or the random access procedure for the candidate beam satisfying the predetermined quality criteria is not successful within the time period of the timer value. The NCR-MT 520A in the RRC inactive state may determine that the BFR is failed in response to that the number of times of discovering a candidate beam not satisfying the predetermined quality criteria reaches the upper limit value or the number of times of failing in the random access procedure for a candidate beam satisfying the predetermined quality criteria reaches the upper limit value.
   b4) When performing the BFR is performed, the configuration may include information designating processing at the time of BFR failure. For example, the information may include information designating whether the NCR-MT 520A performs the RRC connection resumption. When not performing the RRC resumption (when continuing the RRC inactive state), the information may include information designating whether to turn off the NCR-Fwd 510A or keep the NCR-Fwd 510A in the on state.

In step S24, the NCR-MT 520A having transitioned to the RRC inactive state the NCR-MT 520A in the RRC connected state performs the relay operation using the NCR-Fwd 510A in the on state based on the first configuration information included in the NCR configuration (latest configuration). The NCR-MT 520A in the RRC inactive state performs the BFD based on the BFD/BFR configuration for the RRC inactive state (second configuration information).

In step S25, the NCR-MT 520A in the RRC inactive state checks whether a beam failure is detected by the BFD. When no beam failure is detected, the process returns to step S24.

When a beam failure is detected (step S25: YES), in step S26, the NCR-MT 520A in the RRC inactive state performs an operation designated by the BFD/BFR configuration (e.g., BFR and/or RRC connection resumption) based on the BFD/BFR configuration for the RRC inactive state (second configuration information).

### (2.1) Variation of Second Embodiment

In the second embodiment, an example is described in which whether to perform the beam failure detection (BFD) and/or the beam failure recovery (BFR) is explicitly configured from the gNB 200 for the NCR-MT 520A, but the present invention is not limited thereto. The NCR-MT 520A can determine whether to perform the beam failure detection and/or the beam failure recovery processing in the RRC inactive state based on the operation state of the NCR-Fwd 510A.

That is, when the NCR-MT 520A transitions to the RRC inactive state, when the NCR-Fwd 510A is in the on state (for example, performing the periodic beamforming operation), the NCR-MT 520A performs the beam failure detection and/or the beam failure recovery processing in the RRC inactive state. When the NCR-Fwd 510A is controlled to be off (not performing the relay operation), the beam failure detection and/or the beam failure recovery processing in the RRC inactive state is not performed. This enables the NCR-MT 520A to determine whether to perform the beam failure detection and/or the beam failure recovery processing in the RRC inactive state without the explicit configuration made from the gNB 200.

### (3) Third Embodiment

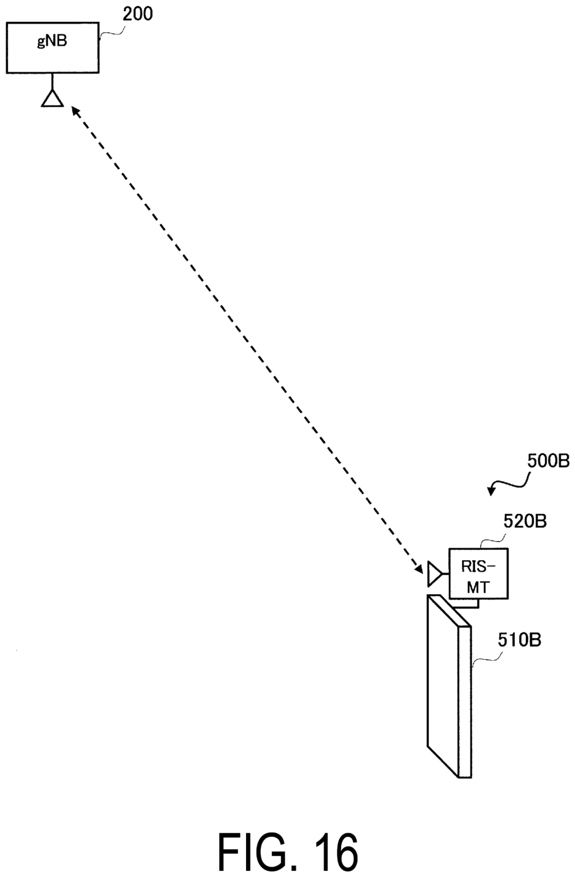

A third embodiment is described mainly focusing on differences from the above-described embodiments. As illustrated in FIG. 16, a relay apparatus according to the third embodiment is a reconfigurable intelligent surface (RIS) apparatus 500B that changes a propagation direction of an incident radio wave (radio signal) through reflection or refraction. The "NCR" in the above-described embodiments may be read as the "RIS".

The RIS is a type of a relay device (hereinafter, also referred to as a "RIS-Fwd") capable of performing beamforming (directivity control) in the same and/or similar way to the NCR by changing the characteristics of metamaterials. The RIS may be able to change a range (distance) of a beam by controlling a reflection direction and/or a refraction direction of each unit element. For example, the RIS may have a configuration capable of controlling the reflection direction and/or refraction direction of each unit element, and focusing on a near UE (directing a beam) or focusing on a far UE (directing a beam).

The RIS apparatus 500B includes a new UE (hereinafter referred to as "RIS-MT") 520B that is a control terminal for controlling RIS-Fwd 510B. The RIS-MT 520B controls the RIS-Fwd 510B in cooperation with the gNB 200 by establishing a wireless connection to the gNB 200 and performing wireless communication with the gNB 200. The RIS-Fwd 510B may be a reflective RIS. Such an RIS-Fwd 510B reflects an incident radio wave to change a propagation direction of the radio wave. Here, a reflection angle of the radio wave can be variably set. The RIS-Fwd 510B reflects radio waves incident from the gNB 200 toward the UE 100. The RIS-Fwd 510B may be a transmissive RIS. Such an RIS-Fwd 510B refracts an incident radio wave to change the propagation direction of the radio wave. Here, a refraction angle of the radio wave can be variably set.

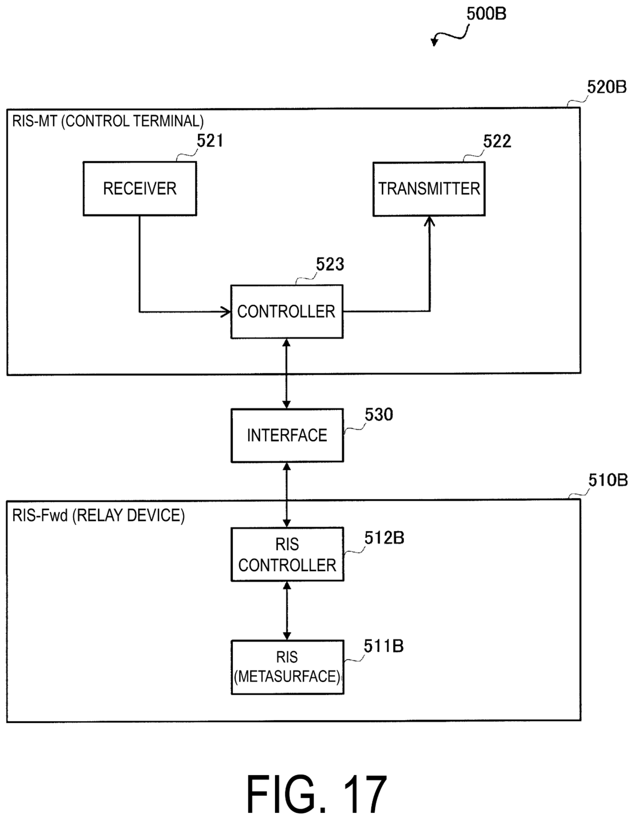

FIG. 17 is a diagram illustrating examples of configurations of the RIS-Fwd (relay device) 510B and the RIS-MT (control terminal) 520B according to the second embodiment. The RIS-MT 520B has a receiver 521, a transmitter 522, and a controller 523. Such a configuration is the same as and/or similar to that of the above-described embodiment. The RIS-Fwd 510B includes a RIS 511B and a RIS controller 512B. The RIS 511B is a metasurface configured using a metamaterial. For example, RIS 511B is configured by disposing extremely small structures relative to the wavelength of radio waves in an array, and the direction and/or beam shape of the reflected waves can be arbitrarily designed by making the structures different shapes depending on their disposition location. The RIS 511B may be a transparent dynamic metasurface. The RIS 511B may be configured by stacking a transparent glass substrate on transparent version of a metasurface substrate on which a large number of small structures are regularly disposed, and may be capable of dynamically controlling three patterns of a mode of transmitting an incident radio wave, a mode of transmitting a part of a radio wave and reflecting a part thereof, and a mode of reflecting all radio waves by minutely moving the stacked glass substrate. The RIS controller 512B controls the RIS 511B in response to a RIS control signal from the controller 523 in the RIS-MT 520B. The RIS controller 512B may include at least one processor and at least one actuator. The processor interprets a RIS control signal from the controller 523 in the RIS-MT 520B to drive the actuator in response to the RIS control signal.

### (4) Other Embodiments

In the above-described embodiment, an example in which the relay apparatus performing relay transmission is the NCR apparatus 500A or a RIS apparatus 500B has been described. However, the relay apparatus that performs relay transmission is not limited to the NCR apparatus 500A or the RIS apparatus 500B, and may be an integrated access and backhaul (IAB) node defined in the technical specifications of 3GPP.

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

In the above-described embodiment, an example in which the base station is an NR base station (gNB) has been described, but the base station may be an LTE base station (eNB). The base station may be a relay node such as an IAB node. The base station may be a distributed unit (DU) of the IAB node.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

That is, the UE 100 may be a terminal function unit (a type of communication module) for a base station to control a relay device that performs signal relay. Such terminal function unit is referred to as an MT. Examples of the MT include, a Network Controlled Repeater (NCR)-MT, a Reconfigurable Intelligent Surface (RIS)-MT, in addition to the IAB-MT.

The term "network node" mainly means a base station, but may also mean a core network apparatus or a part (CU, DU, or RU) of the base station. The network node may include a combination of at least a part of the apparatus of the core network and at least a part of the base station.

A program causing a computer to execute each of the processes performed by the communication apparatus according to the embodiment described above, for example, the UE 100 (NCR-MT 520A and RIS-MT 520B) or the gNB 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 and the gNB 200 may be implemented as a semiconductor integrated circuit (chipset, System on a chip (SoC)).

A program causing a computer to execute each processing performed by the UE 100, the gNB 200, or the relay apparatus may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for executing each processing performed by the UE 100, the gNB 200, or the relay apparatus may be integrated, and at least a part of the UE 100, the gNB 200, or the relay apparatus may be configured as a semiconductor integrated circuit (chipset or system on a chip (SoC)).

The functions achieved by the UE 100, the gNB 200 (the network node), or the relay apparatus may be implemented in a circuitry or a processing circuitry programmed to perform the described functions, including a general-purpose processor, a special-purpose processor, an integrated circuit, application specific integrated circuits (ASICs, a central processing unit (CPU), a conventional circuit, and/or combinations thereof. The processor includes a transistor and other circuits, and is considered as circuitry or processing circuitry. The processor may be a programmed processor that executes a program stored in a memory. In the present description, circuitry, units, means are hardware programmed to achieve or hardware to execute the described functions. The hardware may be any hardware disclosed in the present description, any hardware programmed to achieve or known to execute the described functions. When the hardware is a processor considered to be a type of circuitry, the circuitry, means, or units are a combination of hardware and software used to configure the hardware and/or processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

This application claims priority to US Provisional Patent Application No. 63/501479 (filed on May 11, 2023), the contents of which are incorporated herein by reference in their entirety.

### (5) Supplementary Notes A

Features relating to the embodiments described above are described below as supplements.

### Supplementary Note 1

A communication method performed by a relay apparatus, the relay apparatus including a relay device configured to perform a relay operation of relaying a radio signal transmitted between a network node and a user equipment, and a control terminal configured to receive a control signal used for control of the relay device from the network node, the communication method including:
a step of receiving configuration information regarding the relay operation from a first cell;
a step of performing the relay operation by use of the configuration information when the control terminal is in a radio resource control (RRC) inactive state in the first cell;
a step of stopping the relay operation when performing a cell reselection from the first cell to a second cell; and
a step of resuming the relay operation by use of the configuration information when performing a cell reselection to the first cell within a predetermined time period after performing the cell reselection to the second cell.

### Supplementary Note 2

The communication method according to supplementary note 1, further including:
a step of receiving a timer value defining the predetermined time period from the first cell; and
a step of starting a timer with the timer value being set, in response to performing the cell reselection from the first cell to the second cell.

### Supplementary Note 3

The communication method according to supplementary note 2, further including
a step of receiving, from the first cell, an RRC release message for causing the control terminal to transition from an RRC connected state to the RRC inactive state,
wherein the RRC release message includes the timer value.

### Supplementary Note 4

The communication method according to supplementary note 2 or 3, wherein
the step of resuming the relay operation includes a step of resuming the relay operation by use of the configuration information when performing the cell reselection to the first cell before the timer expires.

### Supplementary Note 5

The communication method according to any one of supplementary notes 1 or 4, wherein
the configuration information includes a configuration of periodic beamforming in the relay operation, and
the step of resuming the relay operation includes a step of resuming the periodic beamforming by use of the configuration information.

### Supplementary Note 6

A relay apparatus including:
a relay device configured to perform a relay operation of relaying a radio signal transmitted between a network node and a user equipment; and
a control terminal configured to receive a control signal used for control of the relay device from the network node,
wherein the control terminal includes:
   a receiver configured to receive configuration information regarding the relay operation from a first cell; and
   a controller configured to control the relay device to perform the relay operation by use of the configuration information when the control terminal is in a radio resource control (RRC) inactive state in the first cell, and
   the controller is configured to:
      stop the relay operation when performing cell reselection from the first cell to a second cell; and
      resume the relay operation by use of the configuration information when performing a cell reselection to the first cell within a predetermined time period after performing the cell reselection to the second cell.

### Supplementary Note 7

A communication method performed by a relay apparatus, the relay apparatus including a relay device configured to perform a relay operation of relaying a radio signal transmitted between a network node and a user equipment, and a control terminal configured to receive a control signal used for control of the relay device from the network node, the communication method including:
a step of receiving first configuration information regarding the relay operation from the network node;
a step of receiving, from the network node, second configuration information regarding whether the control terminal in a radio resource control (RRC) inactive state performs detection processing of a beam failure with respect to the network node; and
a step of controlling the relay operation, based on the first configuration information and controlling the detection processing, based on the second configuration information, when the control terminal is in the RRC inactive state.

### Supplementary Note 8

The communication method according to supplementary note 7, wherein
the second configuration information includes information designating whether the control terminal in the RRC inactive state performs the detection processing.

### Supplementary Note 9

The communication method according to supplementary note 7 or 8, further including
a step of starting an RRC connection resumption for the control terminal to transition to an RRC connected state in response to the beam failure being detected in the detection processing, when the control terminal is in the RRC inactive state.

### Supplementary Note 10

The communication method according to any one of supplementary notes 7 to 9, wherein
the second configuration information includes information designating whether to continue the relay operation when the control terminal in the RRC inactive state detects the beam failure.

### Supplementary Note 11

The communication method according to any one of supplementary notes 7 to 10, further including
a step of stopping the relay operation in response to the beam failure being detected in the detection processing and a candidate beam satisfying a predetermined quality criterion failing to be specified, when the control terminal is in the RRC inactive state.

### Supplementary Note 12

A relay apparatus including:
a relay device configured to perform a relay operation of relaying a radio signal transmitted between a network node and a user equipment; and
a control terminal configured to receive a control signal used for control of the relay device from the network node,
wherein the control terminal includes
a receiver configured to receive first configuration information regarding the relay operation from the network node, and receive, from the network node, second configuration information regarding whether the control terminal in a radio resource control (RRC) inactive state performs detection processing of a beam failure with respect to the network node, and
a controller configured to control the relay operation, based on the first configuration information and control the detection processing, based on the second configuration information, when the control terminal is in the RRC inactive state.

### (6) Supplementary Notes B

### 1. Introduction

RAN #99 approved a three month extension of work items for network control repeaters (NCRs) to solve the remaining problems in RAN2 #119bis-e, RAN2 #120, and RAN2 #121.

In the supplementary notes, the open/potential problems of RAN2 left in the NCR are discussed.

### 2. Discussion

### 2.1. Wake-Up Timer

As agreed by the RAN2, the gNB can intentionally put the NCR-MT in the idle state due to policies such as NCR power saving and network congestion, since "the network needs to be able to transmit the NCR-MT in the RRC idle". However, since RAN paging cannot be used for the NCR-MT in the idle state, the gNB has no way to transition the NCR-MT to connected, i.e., unreachable. It is therefore clear that when the NCR is released to the idle state, the NCR is no longer a network-controlled repeater and is considered to be similar to, for example, a legacy RF repeater.

Observation 1: Even when the gNB intentionally put the NCR-MT in the idle state due to the policies such as NCR power saving and network congestion, the gNB cannot page the NCR-MT.

To solve this problem, RAN2 #121 bis-e discussed whether to rely on OAM implementation or to introduce a wake-up timer, but the conclusion was deferred as follows.

Proposal 1: In Rel-18, the "wake-up timer" IE is not defined in the RRC Release message.

There is also an idea that "it is desired to secure network control by a simple method. The NAS can trigger service requests and registration requests."
There is also an idea that "since NCR-WRD in the RRC idle is off, the original intention is no longer valid and the only objective is to return to RRC connected. We believe there are a number of implementation-specific ways to achieve this. There is no time to send the LS to CT 1 ". There is also an idea that "the main motivation against the timer is an influence on the NAS, but the influence seems to be minor. When the influence on the NAS is large, the OAM solution is agreed upon."
There is also an idea that "the biggest problem is not the influence of the NAS, but the motivation for having such a timer".
There is also an idea that "the timer is processed by the AS, and when the timer expires, the NAS is notified of the expiration. Since OAM is static and cannot be used in this case, the gNB control is desirable."
There is also an idea that "when they are the same, they may be processed by the OAM. RAN3 agrees that the OAM is supported."
There is also the idea that "whether interoperability is a key issue in the scope of NCR needs to be studied."
There is also the idea that "both solutions work."
The above needs to be further studied.

Therefore, this problem needs to be discussed and concluded to complete the Rel-17 NCR WI.

### 2.1.1 OAM-Based Solutions

Specifically, the OAM server generates DL OAM traffic (U-plane data) that triggers the AMF to initiate CN paging to the NCR-MT. However, it is not clear how the OAM server knows that the NCR-MT is in the idle state, since it is assumed that there is no way to send UL OAM traffic (U-plane data, indicating release to IDLE, for example) when the gNB releases the NCR-MT, that is, when the NCR-MT receives the RRC release.

Observation 2: Since the NCR-MT, after released by the gNB, has no way to transmit the UL OAM traffic, the OAM does not know whether the NCR-MT is in the idle or not.

In addition, it is somewhat unnatural for the OAM server to be forced to return the NCR-MT to connected while the gNB intentionally releases the NCR-MT for some purpose. In order to solve these problems, some adjustment needs to be assumed to be performed between the gNB-OAM and the NCR-OAM. However, this results in increased operator workload or elimination of multi-vendor interoperability.

Observation 3: The DL OAM traffic may be an option to trigger the AMF to page the NCR-MT in the idle state, but adjustment is needed between the gNB-OAM and the NCR-OAM, leading to efficiency decrease in the network operation and interoperability decrease.

Another implementation option is to use an OAM client on the NCR-MT. The OAM client can use the release status of the NCR-MT as well as the failure status (such as RLF, RRC resume failure, or the like) and the initial access status (such as power on) to determine the transition of the NCR-MT to the idle state. For the failure and the initial access, the OAM client may generate the UL OAM traffic (that is, U-plane data) for connections with the OAM server, or the like. The UL packet triggers the RRC connection establishment procedure as it is currently. That is, for the NCR-MT in the idle state, the NCR-MT initiates RRC connection establishment immediately after being released from the gNB, because the RRC connection establishment is an automatic process.

Observation 4: The use of UL OAM traffic is another option to trigger the NCR-MT to initiate the RRC connection establishment, but may happen immediately after the gNB releases the NCR-MT to the idle state.

In light of the above observations, these implementations do not work well by themselves, as OAM-based solutions can cause other problems.

On the other hand, it is clear that the advantages of the OAM based solution do not influence the specifications.

Observation 5: The advantage of the OAM based solution is that it does not influence the specifications.

### 2.1.2 Timer-Based Solutions

As a trigger for the NCR-MT to return to the RRC connection, a wake-up timer was proposed and discussed in RAN2 #121 offline, online, and RAN2 #121 bis-e offline, online. The idea is that the NCR-MT starts a timer (when configured with the RRC release) and upon expiration of the timer, the NCR-MT initiates the RRC connection establishment procedure. This simple solution solves the problem mentioned in observation 3 (especially when the OAM server does not implement automatic generation of DL traffic such as keep-alive messages) and allows the gNB to control the NCR-MT in the idle state.

For keep-alive messages as the OAM based solution, especially when the gNB rarely idles the NCR-MT, a lot of unnecessary messages are required, which depends on the gNB implementation.

Observation 6: The wake-up timer can solve the problem identified in observation 3, especially when the OAM server does not implement so-called keep-alive messages and the RRC connection control is fully under the control of the gNB.

In RAN2 #121 bis-e, some companies were concerned about how much influence would be given to the NAS specifications. In general, two approaches below are conceivable.

### - AS-based approach

- When the wake-up timer expires, the AS may act in the same way as in receiving a paging message, that is, the AS indicates the UE-ID (i.e., UE-Identity) to the NAS. The NAS may also operate as if the access attempt is MT access (that is, Access Identity 0 and Access Category 0 of "MT_ acc"), so the AS may set the establishment cause with the MT access according to the access attempt of the NAS. Since the expiration of the wake-up timer means that the network (that is, gNB) calls back the NCR-MT to the connected, this establishment cause (that is, MT access) is considered to be in line with the current definition. This solution has no (or little) influence on the NAS specifications, but the AS specifications need to be slightly modified for the operation upon the timer expiration.

### - NAS-based approach

- When the wake-up timer expires, the AS notifies the NAS, and the NAS requests establishment of a signaling connection. This may be considered a new definition of the access attempt, and thus may require, for example, the addition of procedural descriptions (or annotations) to the NAS specifications, in addition to the small influence on the AS specifications due to the new operation upon the timer expiration.
- Another option is conceivable that the AS transfers the wake-up timer value when configured in the RRC release. The NAS processes the timer and requests establishment of a signaling connection upon the timer expiration. In this solution, in addition to the new definition of the access attempts described above, timer handling needs to be defined in the NAS specifications. Therefore, in addition to the new operation in the AS specifications, this option has the greatest influence on the NAS specifications.

In light of the above analysis, it is concluded that the timer needs to be handled by the AS in order to minimize potential influence on the NAS. An AS-based approach is desirable because the influence on other WGs is minimized (or avoided). In this sense, the influence on the NAS specifications is not significantly considered to be a major concern.

Observation 7: The wake-up timer does not influence (or gives a very little influence on) the operation of the NAS as long as the timer is handled by the AS.

Note that when the OAM based solution discussed in the previous section is desired, the gNB always chooses the option of not configuring the timer in the RRC release. That is, this option is not harmful but ensures efficient network operation and interoperability.

Proposition 1: RAN2 needs to agree to introduce the wake-up timer for the gNB to control the idle NCR-MT to establish an RRC connection.

Proposition 2: RAN2 needs to discuss whether the AS acts as if it received a paging message, that is, whether the AS indicates its UE-ID to the NAS when the wake-up timer expires.

When proposal 1 can be agreed, the timer value needs to be discussed. According to the existing mechanisms related to access barring/prohibition in the idle state, 300 seconds (or 5 minutes) is a typical time period for a UE to exclude, for example, a barred cell from candidates for the cell reselection, and may be the lowest value of this timer. The discussion in RAN2 #121 bis-e shows an example where the gNB may not use the NCR during times of low traffic (e.g., at night) and may put the NCR in the idle state. Therefore, the upper limit of the timer value of 12 hours is considered to be appropriate. When the timer value is 8 bits, the mapping is, for example, "300 seconds (5 minutes), 10 minutes, 30 minutes, 60 minutes (1 hour), 3 hours, 12 hours".

Proposition 3: RAN2 needs to discuss the range of values for the wake-up timer (e.g., from 300 seconds to 12 hours).

Proposition 4: RAN2 needs to discuss how many bits the wake-up timer setting is (e.g., 8 bits for baseline).

Another possibility is a prohibit timer, whereby the NCR-MT starts a timer (when configured in the RRC release) and the NCR-MT is not allowed to initiate the RRC connection establishment procedure while the timer is running. This solution solves the problem of observation 3 (especially when the OAM server implements frequent automatic generation of DL traffic such as keep-alive messages) and the problem of observation 4, and the gNB can also control the NCR-MT in the idle state.

Observation 8: The prohibit timer can solve the problem specified in observation 3 (especially when the keep-alive messages occur frequently), as in observation 4, where the RRC connection control of the NCR-MT is entirely under the control of the gNB.

In other words, the NCR-MT in the idle state may also be network-controlled. This is considered more efficient as two separate timers for the wake-up timer and the prohibit timer are not required.

Observation 9: Integrating the wake-up timer and the prohibit timer in one timer is efficient and feasible.

Proposition 5: When proposition 1 can be agreed, the RAN2 needs to further discuss whether the NCR-MT is not allowed to initiate the RRC connection establishment while the wake-up timer is running, that is, whether the wake-up timer also functions as a prohibit timer (one timer).

When proposal 5 is accepted, it is clear that RRC connection establishment by way of the UL traffic (e.g. UL OAM client packets) is not allowed, but whether the same is true for the DL traffic (e.g. DL OAM server packets) is worth studying. When the RRC connection establishment by way of the DL traffic is not allowed, the NCR is unreachable from the network/OAM client while the timer is running. Therefore, the prohibit timer needs to be applied only to the RRC connection establishment by way of the UL traffic. For example, this applies to when the gNB wants to avoid the NCR-MT going back to connected by way of the DL traffic (e.g., by the keep-alive messages of the OAM server). Therefore, whether this restriction is configurable by the gNB is another problem.

Proposal 6: When proposal 5 can be agreed, RAN2 needs to further discuss whether the prohibit timer can be applied only to the UL traffic (such as the OAM client), that is, whether the RRC connection establishment is allowed for the DL traffic (such as the OAM server, the paging reception) when the timer is running.

Proposal 7: When proposal 6 can be agreed, RAN2 needs to further discuss whether the restriction can be configured by the gNB, that is, whether the prohibit timer applies only to the UL traffic or to both the DL and UL traffic.

### 2.2. Beam Monitoring Inactive in RRC

As one of the backgrounds, RAN2 #120 agreed on the on or off operation of the NCR-Fwd when NCR-MT is connected and inactive.

### On/Off of NCR-Fwd

- When the NCR-MT is in the RRC connected mode, the NCR-Fwd can be turned on or off in accordance with the side control information received from the gNB.
- After the NCR-MT enters the RRC inactive mode, the NCR-Fwd can be turned on or off in accordance with the configuration last received from the gNB.
- Further study is needed for release to the RRC idle state.

And finally, RAN2 #121 bis-e agreed to use the NCR-MT in the idle state.

When the NCR-MT is in the RRC idle state, the NCR-Fwd is off.

According to the above agreement, the basic principles of the NCR are considered as follows.
- The NCR-Fwd when the NCR-MT is connected or inactive is under the control of the gNB.
- The NCR-Fwd is considered out of control from the gNB when the NCR-MT is in the idle state.

Observation 10: The NCR-Fwd is under the control of the gNB when the NCR-MT is inactive.

As another background, RAN2 #121 agreed that the NCR-MT resumes the RRC connection immediately after the cell reselection to a different cell and provides new side control configuration.
- When the NCR-MT in the RRC inactive state reselects a cell different from the last serving cell in which the side control configuration is received, the NCR-FWD is turned off.
- After the cell reselection, the NCR-MT resumes to be able to receive the side control configuration from the new gNB (which is possible due to the network configuration using the existing specifications). Further study is needed for the NCR-MT moving back to an acceptable cell and no cell being found.

Observation 11: When the NCR-MT reselects to a different cell, the NCR-Fwd is already turned off and the NCR-MT needs to resume the RRC connection to the new cell to provide the side control configuration.

In addition to these, RAN2 #121 bis-e has discussed whether beam monitoring of the backhaul link is required when the NCR-MT is inactive.

Proposal 4: When needed, the beam monitoring of the backhaul link when the NCR-MT is in the RRC inactive state can be performed in the implementation.

There is also an opinion that "although not opposing, what "implementation" means is a question."
There is also an opinion "what happens when the NCR-FWD in the RRC inactive selects a new beam."
There is also an idea that "whether to send the UE to the RRC inactive depends on the network, and the network needs to be aware of the situation (e.g., whether the beam can be changed), in which case the UE can be kept RRC connected."
There is also an opinion about "whether the NCR-FWD being off in this case can be agreed." There is also an opinion that "the beam is desirably not changed without being recognized by the network in the inactive state."
The above may be further discussed.

The key point in the above discussion was what happens when a beam failure is detected by the inactive NCR-MT. According to the previous discussion, possible operations are as follows:
- Alt. 1: When a beam failure is detected or when the beam failure recovery is failed, the NCR-Fwd is turned off.
- Alt. 2: When a beam failure is detected, the NCR-MT resumes the RRC connection.

Considering the principles of observation 10, Alt. 1 is not acceptable, since it means that the NCR-Fwd can be automatically turned off even when the NCR-MT is still camping on the cell in which it has provided the last side control configuration. Or, Alt. 1 may mean that the NCR itself can control turning on or off of the NCR-Fwd even when the NCR-MT is connected, which is not only inappropriate, but also violates the above RAN2 agreement.

On the other hand, Alt. 2 is considered as a kind of the NCR operation at the time of the cell reselection of observation 11. That is, in Alt. 2, the NCR-MT needs to acquire a new side control configuration at the time of beam failure. Thus, Alt. 2 is considered a viable solution, but the NCR-Fwd may need to be turned off when a beam failure is detected as in Alt. 1. On the other hand, the offline discussion points out that the gNB monitors the end-to-end radio link with the UE, and thus can detect such failures depending on the implementation. This is rather consistent with the principle specified in observation 10, namely that the NCR with the NCR-MT inactive is under the control of the gNB.

In summary, Alt. 2 is a visible solution, but not at the same time indispensable. Considering the time left to solve other essential problems, beam monitoring in inactive does not need to be supported, at least in Rel-18.

Proposition 8: RAN2 needs to agree that beam monitoring in inactive is not supported in this release.

### 2.3 Frequency Prioritization in Cell Reselection

As the background, RAN2 #120 agreed to the following description.
The NCR-MT in the RRC idle state and the RRC inactive state supports the cell reselection and the RRM measurement.

In Rel-18, the NCR-MT in the RRC connected state does not support the handover and the RRM measurement.

The problem with the cell reselection is priority processing for a particular cell. For the legacy RF repeater, arrangement is determined by network planning and/or RF measurement on site. Thus, it is assumed that a desired cell(s) is planned for each NCR. That is, the network planning determines a relationship between the serving cell and the NCR. Such a desired cell is likely to be configured for the NCR by the OAM.

Observation 12: The NCR can configure a desired cell by, for example, the OAM, and the desired cell means a cell the NCR-MT is going to camp on and/or connect to.

In fact, RAN3 supports the BL CR of the Stage-2 specifications, and the OAM server can configure the allowed cell list and the prohibited cell list for the NCR (that is, the OAM client).

### X. Y OAM Aspects

A transport connection between an NCR node and its OAM is provided by a PDU session of the NCR-MT. The NCR may be configured with a list of gNB cells to which the NCR-MT is allowed to connect and/or a list of gNB cells to which the NCR-MT is not allowed to connect.

Since the NCR-MT is a type of UE, it is obvious that the NCR-MT needs to follow the idle/inactive mode operation defined in TS38. 304. In the e-mail discussion of RAN2 #121 bis-e, some companies thought that the Stage-2 specifications above could override the operation specific to TS38. 304 through NCR implementation. However, this is not consistent with the common sense of 3GPP suites and their implementation. Therefore, standard support is required to ensure the network planning of the NCR.

RAN3 is allowed to the NCR connected with the allowed cell. That is, it states that camping on the allowed cell is not guaranteed. Similarly, in the Stage-2 specifications, the NCR is not allowed to connect to the prohibited cell, that is, nothing is assumed to avoid camping on the prohibited cell. In such a case, even when the allowed cell meets the S criterion, what happens needs to be considered when the UE cannot camp on the allowed cell (due to frequency priority and/or radio conditions) and when the UE camps on the prohibited cell (because the RAN3 specifications do not describe the camp-on, but describes simply not connecting to the cell).

Observation 13: The specifications of the allowed and prohibited cell lists in Stage-2 of RAN3 do not mean that NCR-MT implementation is allowed to overwrite the cell reselection procedure strictly defined in TS38. 304.

The simplest approach is to enhance priority processing of cell reselection. As with the MBS frequency or the sidelink frequencies (prioritized according to UE preference), exceptions to the NCR-MT priority processing are defined so that the allowed cell can be considered to have the highest priority and the prohibit cell to have the lowest priority. With this enhancement, the NCR-MT can always measure and attempt to reselect the allowed cell and can also attempt not to reselect the prohibited cell. Therefore, at least for each frequency level, these exceptions need to be defined when the NCR-MT requires such prioritization, that is, when the cell list is configured by the OAM.

The simplest approach is to enhance priority processing of cell reselection. As with the MBS frequency or the sidelink frequencies (prioritized according to UE preference), exceptions to the NCR-MT priority processing are defined so that the allowed cell can be considered to have the highest priority and the prohibit cell to have the lowest priority. With this enhancement, the NCR-MT can always measure and attempt to reselect the allowed cell and can also attempt not to reselect the prohibited cell. Therefore, at least for each frequency level, these exceptions need to be defined when the NCR-MT requires such prioritization, that is, when the cell list is configured by the OAM.

Proposition 9: RAN2 needs to agree that the NCR-MT considers a particular frequency to have the highest or lowest priority based on the expected capabilities of the NCR-MT (for example, when the allowed and/or the prohibited cell lists are configured by the OAM).

This is because the prioritization is likely to cause the NCR-MT to reselect an undesired cell of the same frequency in consideration of the NCR-MT being arranged at a cell edge (that is, a coverage of a macro cell is extended).

Proposal 10: RAN2 needs to discuss whether the NCR-MT is allowed to prioritize a particular cell (that is, a cell of interest) in the cell reselection procedure within the frequency.

### 2.4. RRC Release with Redirection

RAN2 #121 bis-e agreed to support redirections as is for the UEs.
RAN2 confirms that the RRC release with redirections is applicable to the NCR-MT and the NCR-Fwd is off when the NCR-MT selects a new cell with redirections (no influence on the specifications).

Since the NCR is configured in the allowed cell list and/or the prohibited cell list as defined by RAN3, the NCR-MT can specify the frequencies of the allowed/prohibited cells using, for example, the inter-frequency cell reselection information provided by SIB 4. Since the cell selection is performed at the time of configuring the redirection, which cell of the specified frequency the NCR-MT selects depends on the NCR-MT implementation.

On the other hand, since the gNB may not grasp the frequency of interest of the NCR-MT or the allowed/prohibited cell lists configured for the NCR by the OAM of the NCR, the problem remains how the gNB specifies the particular frequency for redirection, that is, how to configure the redirectedCarrierInfo IE.

Observation 14: How the gNB configures redirectedCarrierInfo in the RRC release is not clear because the gNB may not know the allowed/prohibited cell lists configured for the NCR by the OAM and the corresponding frequencies on which these cells operate.

That is, the operator enters all allowed/prohibited lists configured by the OAM of the NCRs into each NCR that is within the coverage of the gNB. This solution does not influence the specifications, but overloads the operator each time the NCR is arranged in the network.

Another solution is to enable the NCR-MT to notify the gNB of the allowed/prohibited cell lists through UE Assistance Information, UE Capability, or the like. This automatic configuration reduces the operator workload for this configuration, but was approved by the RAN Plenary.

Therefore, RAN2 needs to discuss how to address this problem, at least in the Rel-18 NCR.

Proposition 11: RAN2 needs to discuss whether the gNB identifies the particular frequency configured in redirectedCarrierInfo IE in the RRC release based on the OAM implementation or a new UE report.

### REFERENCE SIGNS

1: Mobile communication system
100: UE
200: gNB
210: Transmitter
220: Receiver
230: Controller
240: Backhaul communicator
300A: AMF
400: OAM server
500A: NCR apparatus
510A: NCR-Fwd
520A: NCR-MT
500B: RIS apparatus
510B: RIS-Fwd
520B: RIS-MT
511A: Wireless unit
511 a: Antenna
511b: RF circuit
511c: Directivity controller
512A: NCR controller
512B: RIS controller
521: Receiver
522: Transmitter
523: Controller
530: Interface

## Claims

1. A communication method performed by a relay apparatus,
the relay apparatus comprising:
a relay device configured to perform a relay operation of relaying a radio signal transmitted between a network node and a user equipment; and
a control terminal configured to receive a control signal used for control of the relay device from the network node,
the communication method comprising:
receiving configuration information regarding the relay operation from a first cell;
performing the relay operation by use of the configuration information when the control terminal is in a radio resource control (RRC) inactive state in the first cell;
stopping the relay operation when performing a cell reselection from the first cell to a second cell; and
resuming the relay operation by use of the configuration information when performing a cell reselection to the first cell within a predetermined time period after performing the cell reselection to the second cell.

2. The communication method according to claim 1, further comprising:
receiving a timer value defining the predetermined time period from the first cell; and
starting a timer with the timer value being set, in response to performing the cell reselection from the first cell to the second cell.

3. The communication method according to claim 2, further comprising
receiving, from the first cell, an RRC release message for causing the control terminal to transition from an RRC connected state to the RRC inactive state,
wherein the RRC release message comprises the timer value.

4. The communication method according to claim 2 or 3, wherein
the resuming of the relay operation comprises resuming the relay operation by use of the configuration information when performing the cell reselection to the first cell before the timer expires.

5. The communication method according to claim 1 or 2, wherein
the configuration information comprises a configuration of periodic beamforming in the relay operation, and
the resuming of the relay operation comprises resuming the periodic beamforming by use of the configuration information.

6. A relay apparatus comprising:
a relay device configured to perform a relay operation of relaying a radio signal transmitted between a network node and a user equipment; and
a control terminal configured to receive a control signal used for control of the relay device from the network node,
wherein the control terminal comprises:
a receiver configured to receive configuration information regarding the relay operation from a first cell; and
a controller configured to control the relay device to perform the relay operation by use of the configuration information when the control terminal is in a radio resource control (RRC) inactive state in the first cell, and
the controller is configured to:
stop the relay operation when performing cell reselection from the first cell to a second cell; and
resume the relay operation by use of the configuration information when performing a cell reselection to the first cell within a predetermined time period after performing the cell reselection to the second cell.

7. A communication method performed by a relay apparatus,
the relay apparatus comprising:
a relay device configured to perform a relay operation of relaying a radio signal transmitted between a network node and a user equipment; and
a control terminal configured to receive a control signal used for control of the relay device from the network node,
the communication method comprising:
receiving first configuration information regarding the relay operation from the network node;
receiving, from the network node, second configuration information regarding whether the control terminal in a radio resource control (RRC) inactive state performs detection processing of a beam failure with respect to the network node; and
controlling the relay operation, based on the first configuration information and controlling the detection processing, based on the second configuration information, when the control terminal is in the RRC inactive state.

8. The communication method according to claim 7, wherein
the second configuration information comprises information designating whether the control terminal in the RRC inactive state performs the detection processing.

9. The communication method according to claim 7, further comprising:
starting an RRC connection resumption for the control terminal to transition to an RRC connected state in response to the beam failure being detected in the detection processing, when the control terminal is in the RRC inactive state.

10. The communication method according to claim 7, wherein
the second configuration information comprises information designating whether to continue the relay operation when the control terminal in the RRC inactive state detects the beam failure.

11. The communication method according to claim 7, further comprising:
stopping the relay operation in response to the beam failure being detected in the detection processing and a candidate beam satisfying a predetermined quality criterion failing to be specified, when the control terminal is in the RRC inactive state.

12. A relay apparatus comprising:
a relay device configured to perform a relay operation of relaying a radio signal transmitted between a network node and a user equipment; and
a control terminal configured to receive a control signal used for control of the relay device from the network node,
wherein the control terminal comprises:
a receiver configured to receive first configuration information regarding the relay operation from the network node, and receive, from the network node, second configuration information regarding whether the control terminal in a radio resource control (RRC) inactive state performs detection processing of a beam failure with respect to the network node; and
a controller configured to control the relay operation, based on the first configuration information and control the detection processing, based on the second configuration information, when the control terminal is in the RRC inactive state.
